(19) Europäisches Patentamt
European Patent Office
Office européen des brevets

(11) **EP 4 203 424 B1**

(12) **FASCICULE DE BREVET EUROPEEN**

(45) Date de publication et mention de la délivrance du brevet:
**24.07.2024 Bulletin 2024/30**

(21) Numéro de dépôt: **22212829.0**

(22) Date de dépôt: **12.12.2022**

(51) Classification Internationale des Brevets (IPC):
*H04L 45/28* (2022.01)    *H04L 45/48* (2022.01)
*H04L 49/113* (2022.01)

(52) Classification Coopérative des Brevets (CPC):
**H04L 45/28; H04L 45/48; H04L 49/113**

(54) **SYSTÈME À BASE DE MATRICE DE REDONDANCE**

REDUNDANZMATRIXSYSTEM

REDUNDANCY MATRIX BASED SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2021 FR 2114068**

(43) Date de publication de la demande:
**28.06.2023 Bulletin 2023/26**

(73) Titulaire: **THALES**
**92190 Meudon (FR)**

(72) Inventeurs:
• **ROBE, Thomas**
**31000 TOULOUSE (FR)**
• **ADAM, Thierry**
**31000 TOULOUSE (FR)**
• **VENDIER, Olivier**
**31000 TOULOUSE (FR)**
• **THEROND, Benjamin**
**31000 TOULOUSE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
• **MOJGAN DANESHMAND ET AL: "Redundancy RF MEMS Multiport Switches and Switch Matrices", JOURNAL OF MICROELECTROMECHANICAL SYSTEMS, IEEE SERVICE CENTER, US, vol. 16, no. 2, 30 April 2007 (2007-04-30), pages 296 - 303, XP011176358, ISSN: 1057-7157, DOI: 10.1109/JMEMS.2007.892891**
• **SASCHA A FIGUR ET AL: "Simplified 16x8 RF MEMS switch matrix for a GEO-stationary data relay", MICROWAVE CONFERENCE (GEMIC), 2012 THE 7TH GERMAN, IEEE, 12 March 2012 (2012-03-12), pages 1 - 4, XP032169137, ISBN: 978-1-4577-2096-3**

**Description**

**Domaine technique**

L'invention concerne de manière générale la commutation de signaux et en particulier un système à base de matrice de redondance.

Dans certains domaines, il est connu d'utiliser des matrices de redondance pour rerouter les signaux des équipements vers des équipements redondants en cas de panne sur un équipement.

Par exemple, dans l'industrie spatiale, des dispositifs de reconfiguration utilisant des réseaux de commutateurs hyperfréquences, constituant des matrices de redondance, sont implémentés pour reconfigurer les équipements d'un satellite en cas de panne du satellite. De tels dispositifs d'assurer la fiabilité de la charge utile pendant la mission du satellite. Un exemple de réseau spatiale, constituant des matrices est décrit dans le document "MOJGAN DANESHMAND ET AL: "Redundancy RF MEMS Multiport Switches and Switch Matrices",JOURNAL OF MICROELECTROMECHANICAL SYSTEMS, IEEE SERVICE CENTER, US, vol. 16, no. 2, 30 avril 2007, pages 296-303".

Une matrice de redondance est constituée d'un réseau de commutateurs.

Classiquement, la fonction de « matrice de redondance » est remplie par des équipements dénommés « anneaux de redondance », constitués de multiples T-switches ou R-switches interconnectés selon un circuit spécifique.

Avec l'augmentation constante du nombre de canaux et d'équipements installés à bord des satellites VHTS (Very High Throughput Satellites), la complexité, le volume, la surface et le coût des matrices de redondance augmentent de façon critique au point d'empiéter de façon significative sur les surfaces, le budget et la masse allouée à l'électronique utile embarquée.

Par exemple, pour les Charges Utiles des satellites de type VHTS (Very High Throughput Satellites), le nombre de canaux et d'équipements augmentent beaucoup en comparaison avec les Charges Utiles conventionnelles, ce qui fait exploser la complexité des anneaux de redondance, leur surface, masse et coûts. La surface disponible à l'électronique embarquée utile est alors significativement réduite.

Le besoin d'intégrer davantage les matrices de redondance a soutenu le développement de technologies de commutateurs plus intégrés depuis les MEMS (Micro Electro-Mechanical Systems), les commutateurs électroniques, et les micro-*SPDT* (commutateurs électromécaniques miniaturisés).

Ces technologies ont pour point commun d'être basées sur un élément de commutation élémentaire de type *SPST* (Single Pole Single Throw), qui permet, selon leur capacité d'intégration respective, l'élaboration de commutateurs plus complexes de type *nPmT* (n Pole m Throw), R-switch, T-switch, C-switch.

Les matrices de redondance connues reposent généralement sur des commutateurs électromécaniques discrets (coaxiaux T-switches ou guide d'onde R-switches) montés directement sur la structure et interconnectés par un harnais radiofréquences et pilotés au niveau satellite par des harnais de commandes LLC individuelles (cartes PLDIU).

Cependant, il est nécessaire d'améliorer le niveau d'intégration de tels dispositifs classiquement réalisés à partir de commutateurs électromécaniques discrets, commandés individuellement par la plateforme.

Pour améliorer l'intégration des matrices de redondance, il peut être envisagé d'utiliser des commutateurs spécifiques comme par exemple des commutateurs à matériaux à changement de phase (« Phase Change Materials » ou « PCM »), des commutateurs électroniques ou des commutateurs électromécaniques miniaturisés.

Cependant, ces composants présentent une connectivité *SPDT* (Single Pole Double Throw) et non pas de type R/T-switches, ce qui les rend électriquement incompatibles en termes de nombre d'accès et d'états de commutation avec les commutateurs électromécaniques RF classiques.

Il existe très peu de matrices de redondance compatibles avec les commutateurs *SPDT,* et lorsqu'elles ont compatibles avec les commutateurs *SPDT,* elles entraînent un problème majeur de dissymétrie entre des chemins (longueur de lignes et nombre de commutateurs traversés) qui se traduit en pertes différentielles rédhibitoires entre les différentes voies.

Les matrices de redondance existantes sont en effet soumises à de strictes contraintes de disparité d'atténuation entre les chemins. En particulier, lorsque des R/T-switches sont fabriqués à partir de commutateurs SPDT pour pouvoir se référer à une architecture classique, toute disparité d'atténuation présente dans l'architecture de référence se trouve amplifiée. Ce phénomène d'amplification d'atténuation différentielle est d'autant plus problématique que les architectures classiques sont elles-mêmes peu équilibrées en nombre de commutateurs de types R/T-switches d'un chemin à un autre.

Il est également connu d'utiliser des matrices de redondance de type « matrice à nominaux dédiée », compatibles de commutateurs *SPDT* (ou plus généralement *SPnT*). Dans une « matrice à nominaux dédiée », chaque canal dispose d'un accès exclusif à l'un des équipements nominaux. Pour assurer la fonction de redondance, chaque canal a également accès à l'ensemble des équipements redondants.

Cependant, une telle matrice présente également une asymétrie naturelle entre les différents chemins. La différence d'atténuation entre le meilleur chemin et le pire chemin est d'autant plus importante que le nombre de canaux est élevé.

Il existe ainsi un besoin pour un dispositif et un procédé de reconfiguration des équipements d'un satellite utilisant des matrices de redondance permettant un niveau d'intégration amélioré et qui soit compatible avec des commutateurs *SPnT*.

## Définition générale de l'invention

L'invention vient améliorer la situation en proposant un système comprenant un ensemble d'équipements. Les équipements comprennent un ou plusieurs équipements nominaux et un ou plusieurs équipements redondants, un équipement redondant étant associés à un ou plusieurs équipements nominaux, le système comprenant n canaux reliés auxdits équipements, les canaux reliés aux équipements étant des canaux d'entrée ou de sortie des équipements, le système comprenant au moins une matrice de redondance de dimension n $\times$ m configurée pour router les signaux d'un canal d'un équipement donné vers un équipement redondant associé audit équipement donné ou vers un autre équipement nominal, en réponse à la détection d'un événement de déclenchement de reroutage relatif à un équipement. Avantageusement, chaque matrice de redondance est représentée par une grille de connexion ayant une représentation matricielle comprenant des lignes et des colonnes, chaque ligne correspondant à un canal $C_{i, 0 \leq i < n}$ du système et chaque colonne correspondant à un équipement du système. La grille de connexion comprend un ensemble de points de connexion correspondant à un point d'intersection entre un canal et un équipement, les points de connexion de la grille de connexion comprenant au moins :

- l'ensemble des points d'intersection d'un chemin nominal comprenant les points d'intersection de la grille de connexion situés sur une diagonale nominale de la grille de connexion, entre chaque ligne correspondant à un canal d'indice donné i et une colonne correspondant à un équipement nominal de même indice i, et

- l'ensemble des points d'intersection d'un chemin redondant comprenant les points d'intersection de la grille de connexion situés au niveau de l'intersection entre chaque ligne correspondant à un canal $C_i$ d'indice i donné et une colonne correspondant à un élément redondant d'indice f(i) tel que la fonction f est une fonction surjective définie de l'ensemble $[\![0 ; n-1]\!]$ sur $[\![0 ; m-n-1]\!]$ pour tout indice i.

La matrice de redondance est implémentée sous la forme d'un circuit comprenant une pluralité de commutateurs agencés en fonction de la grille de connexion.

Dans un mode de réalisation, chaque matrice de redondance est une matrice de redondance à glissement et les points de connexion de la grille de connexion comprennent en outre :

- l'ensemble des points d'intersection d'un chemin à glissement comprenant les points d'intersection de la grille de connexion situés sur une diagonale supérieure de la grille de connexion, entre chaque ligne correspondant à un canal $C_i$ d'indice i donné et un équipement nominal d'indice i + (e - 1) modulo n avec e désignant une capacité de glissement de la matrice et e strictement supérieur à deux, la capacité de glissement étant le nombre de points de la matrice situés entre un point donné de la diagonale nominale sur une colonne donnée de la grille de connexion et un point de la diagonale supérieure situé sur la même colonne de la grille de connexion.

Chaque matrice de redondance peut être une matrice de redondance à glissement, le chemin à glissement comprenant en outre les points d'intersection de la grille de connexion situés sur une ou plusieurs diagonales intermédiaires de la grille de connexion, entre chaque ligne correspondant à un canal $C_i$ d'indice i donné et un équipement nominal d'indice $E_{i+k \bmod n}$, avec (i, k) appartenant à S et $S \subset [\![0 ; n-1]\!] \times [\![1 ; e-2]\!]$.

Avantageusement, si n est strictement supérieur à zéro et m est strictement supérieur à n + 1, la capacité de glissement e satisfait la condition suivante :

$$2 \leq e \leq \left\lfloor \frac{n}{m-n} \right\rfloor$$

Une matrice de redondance parfaite présente une capacité de glissement e satisfaisant la condition :

$$e \geq m - n.$$

En particulier, une matrice de redondance de capacité de glissement e = m - n est parfaite si et seulement si tous les points des diagonales intermédiaires du chemin à glissement sont des points de connexion.

Une matrice de redondance parfaite a un taux de perfection égal à un, le taux de perfection représentant le nombre d'événements de déclenchements de reroutage couverts par la matrice de redondance.

Dans des modes de réalisation, le système peut comprendre une matrice de redondance d'entrée associée aux canaux d'entrée des équipements et une matrice de redondance de sortie associée aux canaux de sortie des équipements.

Les commutateurs peuvent être de type SPnT.

Dans un mode de réalisation, le circuit implémentant la matrice de redondance peut être basé sur des arbres à commutateurs SPnT.

Avantageusement, le circuit implémentant la matrice de redondance peut comprendre un arbre correspondant à chaque ligne et un arbre correspondant à chaque colonne de la grille de connexion, la racine de chaque arbre de commutateurs SPnT du circuit correspondant à une ligne de la grille de connexion associée à un canal ou à une colonne de la grille de connexion associée à un équipement.

Dans un mode de réalisation, un arbre du circuit implémentant la matrice de redondance connecté à une ligne correspondant à un canal a autant de branches qu'il y a de points de connexion sur la ligne dans la grille de connexion et un arbre du circuit implémentant la matrice de redondance connecté à une colonne correspondant à un équipement a autant de branches qu'il y a de points de connexion sur la colonne dans la grille de connexion.

Dans un mode de réalisation, les arbres correspondant aux lignes de la grille de connexion sont connectés aux arbres correspondant aux colonnes de la grille de connexion.

Le système peut être configuré pour gérer un nombre de pannes sur les équipements, la condition de reroutage étant l'occurrence d'une panne sur un équipement.

Dans un mode de réalisation, le nombre de panne d'équipements pris en charge par le système peut être une fonction croissante de la capacité de glissement de la matrice, lorsque les diagonales intermédiaires sont toutes pleines.

Les modes de réalisation de l'invention fournissent une nouvelle architecture de matrices de redondance utilisant des commutateurs *SPnT.* De par sa structure régulière, une telle architecture ne présente pas les problèmes de pertes différentielles des architectures classiques. Au contraire, elle rend possible un équilibrage individuel des voies.

L'architecture de matrice de redondance selon les modes de réalisation de l'invention repose sur une technique de glissement de proche en proche pour exploiter l'intégralité des équipements redondants installés à bord sans pour autant faire apparaître de longs chemins, ou des chemins contenant un grand nombre de commutateurs.

Entre autre avantages elle présente une capacité à être simplement découpée en briques de base et peut être modulée en complexité pour répondre au juste besoin de fiabilité au niveau charge utile.

## Brève Description des Figures

D'autres caractéristiques, détails et avantages de l'invention ressortiront à la lecture de la description faite en référence aux dessins annexés donnés à titre d'exemple et qui représentent, respectivement :

[Fig.1] La figure 1 représente schématiquement un système comprenant un ensemble d'équipements nominaux et redondants, dans lequel peut être utilisée la matrice de redondance selon les modes de réalisation de l'invention.

[Fig.2]La figure 2 représente un système comprenant une paire de matrices de redondance, selon un mode de réalisation de l'invention.

[Fig.3]La figure 3 représente un exemple de matrice de redondance reposant sur un schéma de redondance 1 pour 4, avec un équipement redondant pour 4 équipements nominaux.

[Fig.4]La figure 4 représente un autre exemple de matrice de redondance ayant un schéma de redondance 1 pour 4 utilisée dans un système comprenant 16 canaux et 16 équipements.

[Fig.5]La figure 5 représente une matrice de redondance ayant une connectivité similaire à la matrice de la figure 4, mais avec un regroupement des équipements nominaux et des équipements redondants.

[Fig.6] La figure 6 illustre un exemple de matrice de redondance à glissement de taille 16×20 composée de 4 matrices 4×5, adapté à la gestion d'une deuxième panne spécifique, dans un même groupe d'équipements nominaux.

[Fig.7]La figure 7 représente une matrice de redondance de dimension 16×20 avec glissement comprenant une diagonale nominale et une diagonale voisine pleine, selon un mode de réalisation de l'invention adapté à la gestion de toute combinaison de deux pannes parmi les équipements.

[Fig.8]La figure 8 représente un exemple de matrice de redondance avec glissement comprenant une diagonale nominale et trois diagonales voisines pleines, selon un mode de réalisation de l'invention adapté à la gestion de toute combinaison de 4 pannes parmi les équipements.

[Fig.9]La figure 9 illustre un découpage d'une matrice de redondance de dimension 16x20 à glissement, en quatre briques rectangulaires élémentaires, selon un exemple de réalisation.

[Fig.10]La figure 10 représente une matrice de redondance à glissement de dimension 16×20, configurée pour gérer 3 pannes spécifiques.

[Fig.11]La figure 11 représente une matrice de redondance à glissement avec diagonale creuse.

[Fig.12]La figure 12 illustre les trois types de chemins de noeuds de connexion dans un exemple de matrice de redondance de dimensions 16×20, parfaite.

[Fig.13]La figure 13 illustre la capacité de glissement d'une matrice de redondance.

[Fig.14]La figure 14 représente un exemple de matrice de redondance à glissement parfaite, de dimension 16x20, ayant une répartition irrégulière des associations canaux et équipements redondants.

[Fig.15]La figure 15 illustre un exemple de matrice de redondance à glissement (matrice creuse), de dimension 16x20, avec un remplissage intermédiaire.

[Fig.16]La figure 16 illustre un exemple de matrice de redondance à glissement (matrice creuse), de dimension 16x20, avec un remplissage minimum.

[Fig.17]La figure 17 représente un sous-ensemble du système comprenant une matrice de redondance d'entrée 10-A et une matrice de redondance de sortie 10-B.

[Fig.18]La figure 18 représente des exemples d'arbres de commutateurs SPDT à k branches pouvant être utilisés dans une implémentation de la matrice de redondance à glissement, selon des modes de réalisation de l'invention.

[Fig.19] La figure 19 représente un exemple d'implémentation de la matrice de redondance à glissement 16×20 parfaite.

[Fig.20]La figure 20 représente un exemple d'implémentation de la matrice de redondance à glissement 16×20 parfaite représentée sur la figure 20, sous la forme d'un circuit comprenant des arbres de commutateurs *SPDT.*

## Description détaillée de la demande

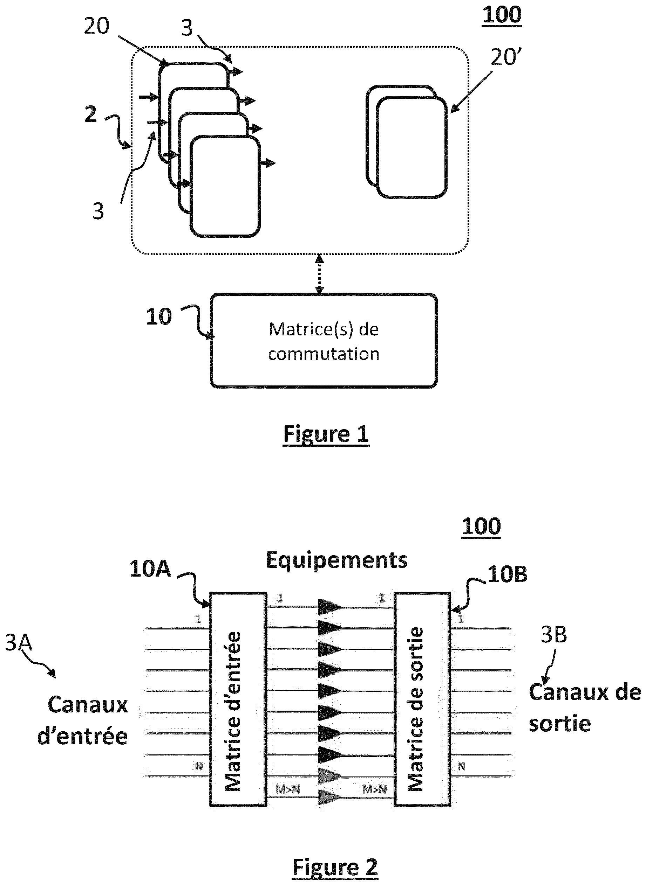

La figure 1 représente schématiquement un système 100 comprenant un ensemble d'équipements 2.

Un équipement désigne un dispositif ou entité appliquant une certaine opération sur un signal arrivant à son entrée pour produire un signal à sa sortie.

Les équipements 2 peuvent comprendre un ou plusieurs équipements nominaux 20 et un ou plusieurs équipements redondants 20'.

Un équipement redondant 20' peut être associé à un ou plusieurs équipements nominaux 20.

Le système 100 comprend au moins une matrice de redondance 10 (encore appelée ci-après 'matrice de commutation') configurée pour router les signaux d'un équipement donné 20 vers un autre équipement redondant 20' opérationnel, associé à l'équipement donné 20, ou d'un équipement nominal 20 vers un autre équipement nominal 20, en réponse à la détection d'un événement de déclenchement de reroutage relatif à un équipement.

Dans des modes de réalisation de l'invention, l'événement de déclenchement de reroutage ('encore appelé 'événement de reconfiguration de la matrice de commutation') peut être un changement dans un ensemble d'équipements exclus. Tel qu'utilisé ici, un 'équipement exclu' fait référence à un équipement exclu de la liste des équipements vers lesquels les canaux peuvent être connectés (le changement peut être par exemple une exclusion d'un nouvel équipement).

Dans un exemple d'application de l'invention à la gestion de pannes, l'ensemble des équipements exclus comprend les équipements en panne suite à l'occurrence d'une ou plusieurs pannes. Dans un tel mode de réalisation, l'événement de déclenchement est alors la détection d'une panne sur un équipement.

Pour un sous ensemble d'équipements exclus donné, le rôle d'une matrice de redondance est d'essayer de connecter chaque canal à un équipement non-exclu. Tel qu'utilisé ici, un équipement redondant 20' désigne un autre équipement opérationnel, similaire à l'équipement nominal associant, apte à réaliser la même fonction que l'équipement opérationnel.

Un équipement 2 est dit « opérationnel » s'il est non défaillant (qui ne fait pas l'objet d'une panne) et activé (non éteint).

Dans un exemple d'application de l'invention, le système 100 peut être par exemple et sans limitation un satellite. Dans une telle application de l'invention, les équipements 2 correspondent alors aux équipements de la charge utile du satellite et sont agencés sur une chaîne radiofréquence. Les matrices de redondances 10 sont utilisées pour router des signaux radiofréquence (RF) des canaux d'un équipement nominal 20 vers un équipement redondant 20' du système 100 ou d'un équipement nominal 20 vers un autre équipement nominal 20.

Dans un tel exemple d'application de l'invention à l'industrie spatiale, l'impossibilité d'assurer la maintenance des satellites en vol (système 100) impose de fiabiliser les Charges Utiles en ajoutant tout le long de la chaîne RF des équipements redondants 20', qui restent éteints et donc qui ne vieillissent pas pendant toute la durée de la mission, jusqu'à l'apparition d'une panne d'un équipement donné 20, où alors l'un des équipements redondants 20' est mis en service pour remplacer un équipement nominal en panne 20. Les matrices de redondance 10 sont alors utilisées pour soustraire au routage de la Charge Utile l'équipement 20 en panne et insérer à sa place l'équipement 20' redondant.

Par exemple, les matrices de redondance peuvent être utilisées pour assurer la redondance d'équipements 20 de type convertisseurs de fréquence.

De telles matrices de redondance peuvent être également utilisées dans des applications optiques.

L'invention s'applique plus généralement à tout système 100 dans lequel des matrices de redondance sont utilisées pour rerouter des signaux des canaux 3 d'un équipement nominal 20 vers un équipement redondant 20' ou d'un équipement nominal 20 vers un autre équipement nominal 20.

Par exemple, la matrice de redondance 10 selon les modes de réalisation de l'invention peut être utilisée dans un système de test 100 configuré pour tester des équipements 20 de type DUT (Device Under Test ou « dispositif testé »), les canaux 3 correspondant alors aux différentes voies de mesure (correspondant aux canaux).

Le système 100 peut comprendre autant de canaux 3 que de signaux utiles.

Les canaux 3 comprennent les canaux d'entrée reliés aux équipements du système ou les canaux de sortie reliés aux équipements du système, la matrice de redondance 10 étant alors configurée pour rerouter les signaux des canaux d'entrée et/ou des canaux de sortie des équipements nominaux 20.

Un accès équipement (encore appelé 'port équipement') correspond à l'interface entre la matrice de redondance 10 et l'entrée ou la sortie d'un équipement 2.

Un canal désigne une voie d'arrivée d'un signal devant être traité par un équipement, ou une voie de départ d'un signal ayant été traité par un équipement.

Un accès canal (ou 'port canal') désigne une interface entre la matrice de redondance et un canal.

La figure 2 représente un système 100 comprenant une paire de matrices de redondance, selon un mode de réalisation de l'invention.

La paire de matrice de redondance comprend une première matrice de redondance 10A (matrice d'entrée) et une deuxième matrice 10B symétrique agencée en sortie (matrice de sortie) encadrant les équipements nominaux 20. Dans un tel mode de réalisation, la première matrice de redondance 10A agencée en amont des équipements 20 est configurée pour distribuer les signaux des canaux d'entrée 3A vers des équipements redondants 20' tandis que la deuxième matrice de redondance 10B réalise une fonction symétrique à celle de la première matrice de redondance 10A en récupérant les signaux des équipements nominaux 20' et en les réacheminant vers les canaux de sortie 3B pour une gestion transparente du réacheminement et une continuité de service.

Dans le cas d'une matrice d'entrée 10A située en amont des équipements, les entrées de la matrice (lignes) correspondent au port canaux, tandis que les sorties de la matrice (colonne) correspondent aux ports équipements.

Dans le cas d'une matrice de sortie 10B située en aval des équipements, les entrées de la matrice (lignes) correspondent aux ports équipements, tandis que les sorties de la matrice (colonnes) correspondent aux ports canaux.

Pour faciliter la compréhension de l'invention, la suite de la description sera faite principalement en référence à une matrice d'entrée dont les lignes correspondent aux ports canaux et les colonnes aux ports équipements. Cependant l'homme du métier comprendra aisément que les modes de réalisation décrits ci-après s'appliquent similairement aux matrices de sortie.

Chaque matrice de redondance 10 est associée à une grille de connexion représentant la connectivité de la matrice, la matrice de redondance étant implémentée sous la forme d'un circuit à partir de la grille de connexion. La grille de connexion représente les points de connexion (ou noeuds de connexion) entre un canal donné $C_i$ et un équipement nominal $E_j$ (20), et les points de connexion entre un canal donné $C_i$ et un équipement redondant $R_k$ (20').

Avantageusement, un circuit implémentant la matrice de redondance comprend une paire de commutateurs SPDT pour chaque point de connexion de la grille de connexion.

Dans la suite de la description la référence 10 sera utilisée pour désigner la matrice de redondance, sa grille de connexion ou le circuit implémentant la grille de connexion.

Le système 100 peut reposer sur un schéma de redondance choisi. Un schéma de redondance « P pour K » défini le nombre P d'équipement redondants 20' pour K équipements nominaux 20.

Un équipement peut être constitué de un ou plusieurs composants.

Dans une application de l'invention aux systèmes satellitaires, un équipement peut par exemple regrouper plusieurs amplificateurs ou convertisseurs de fréquence.

En variante, un équipement peut être un composant unique, tel qu'un amplificateur ou un convertisseur de fréquence individuel.

Un équipement 20 peut avoir ainsi une ou plusieurs voies d'entrées et une ou plusieurs voies de sorties.

La grille de connexion de la matrice de redondance 10 a une représentation matricielle comprenant des lignes $L_i$ et des colonnes $T_j$.

L'indice i correspond à l'indice de la i-ème ligne et l'indice y correspond à l'indice de la j-ième ligne.

Chaque ligne de la matrice de redondance 10 représente une entrée de la matrice de redondance 10, et chaque colonne représente une sortie de la matrice de redondance 10.

Ainsi, dans les modes de réalisation de l'invention où la matrice de redondance 10 est utilisée pour connecter un canal 3 avec un équipement 2, chaque ligne de la grille de connexion correspond à un canal du système 3 et chaque colonne de la grille de connexion correspond un équipement 2 du système 100.

Chaque ligne $L_i$ correspond ainsi à un canal $C_i$ tandis que chaque colonne $T_j$ correspond à un équipement 20 qui peut être un équipement nominal $E_j$ ou un équipement redondant $R_j$ associé à un ou plusieurs équipements nominaux.

Dans la suite de la description, le paramètre n sera utilisé pour désigner le nombre total d'accès canaux 3 (nombre de lignes) d'une matrice de redondance. Les accès canaux d'une matrice de redondance 10 seront notés $C_{i,0 \leq i < n}$.

Le paramètre m sera utilisé pour désigner le nombre total d'accès équipements 2 (nombre de colonnes) de la matrice de redondance. Parmi ces accès équipements, n équipements (correspondant à n colonnes de la grille de connexion) sont dits « nominaux » et seront notés $\mathbf{E}_{i,0 \leq i < n}$. Les autres équipements 20' sont dits « redondants » et seront notés $R_{j,0 \leq j < m-n}$.

La grille de connexion associée à la matrice de redondance 10 a donc une dimension $n \times$ m (n lignes et m colonnes).

Chaque intersection entre une ligne $L_i$ et une colonne $T_j$ représente une connexion possible entre le canal $C_i$ correspondant à la ligne $L_i$ et l'équipement 20 ($E_j$ ou $R_j$) correspondant à la colonne $T_j$.

Seulement certaines des intersections de la grille de connexion correspondent à des points de connexion entre un canal 3 et un équipement 2.

La grille de connexion est configurée de telle sorte qu'une seule connexion soit possible simultanément, c'est-à-dire qu'une ligne $L_i$ ne peut se connecter qu'à une seule colonne $T_j$ et inversement une colonne $T_j$ ne peut être connectée qu'à une seule ligne $L_i$.

Un groupe d'équipements nominaux 20 désigne l'ensemble des équipements nominaux 20 qui sont associés à un même équipement redondant 20'.

Selon les modes de réalisation de l'invention, la grille de connexion de la matrice de redondance 10 est configurée de sorte qu'un canal $C_i$ peut avoir des points de connexion possibles avec plus d'un équipement nominal 20 pour gérer l'occurrence d'un nombre de pannes (plus généralement un nombre d'occurrence d'un événement déclenchant un reroutage) successives sur un groupe d'équipements associés à un même équipement redondant. Par ailleurs, la grille de connexion associée à la matrice de redondance 10 ne comprend qu'une connexion entre un canal donné $C_i$ et un équipement redondant $R_j$ (20'). En cas de panne sur un équipement $E_j$, le canal $C_i$ associé à l'équipement en panne $E_j$ ira se connecter à un équipement redondant $R_{f(i)}$ prédéterminé à partir des points de connexion possibles du canal $C_i$ avec les équipements $E_k$. Un canal $C_i$ ira se connecter en priorité à un équipement redondant pré-déterminé $R_{f(i)}$ s'il est disponible.

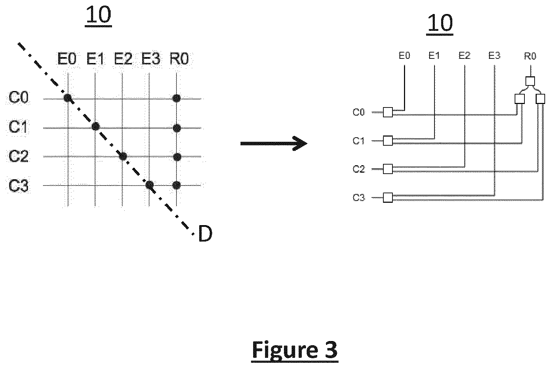

Pour faciliter la compréhension de l'invention, des configurations simplifiées de grille de connexion associées à la matrice de redondance 10 vont être décrites en relation avec les figures 3 à 7.

La figure 3 représente un exemple de matrice de redondance 10 reposant sur un schéma de redondance 1 pour 4, c'est à dire avec un équipement redondant 20' pour 4 équipements nominaux 20.

La figure 3 montre un exemple de matrice de redondance 10 de taille 4*5 à gauche simplifiée, représentée sous la forme d'une grille de connexion, et à droite, dans une implémentation SPDT. La matrice de redondance de la figure 3 est associée à 4 équipements nominaux $E_i$ (20) et 1 équipement redondant $R_0$ (20') associé aux 4 équipements. La matrice de redondance 10 comprend 4 accès canaux $C_i$, chaque canal $C_i$ étant connecté à un équipement $E_i$ de même indice $i$ sur la diagonale nominale D de la matrice.

Avec une telle matrice redondance 10 (représentée par la grille de connexion de la figure 3), chaque canal $C_i$ peut être connecté à son équipement nominal $E_i$ (20) ou vers l'équipement redondant $R_0$ (20') associé, si l'équipement $E_i$ tombe en panne.

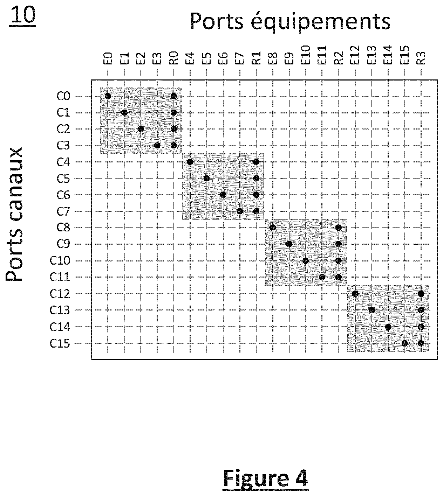

La figure 4 représente un autre exemple de matrice de redondance 10 ayant un schéma de redondance 1 pour 4 utilisée dans un système 100 comprenant 16 canaux 3 et 16 équipements 20. Le système 100 utilise 4 équipements redondants 20' et 4 matrices de redondance 10 juxtaposées pour satisfaire le schéma de redondance 1 pour 4, avec l'implémentation la plus simple possible. Dans la figure 3, un équipement redondant $R_j$ est placé à la suite des 4 équipements nominaux $E_i$ (20) qui lui sont associés. La matrice de redondance est de taille 16*20 (20 colonnes correspondant aux 16 équipements nominaux $E_j$ et aux 4 équipements redondants $R_{jk}$) et juxtapose 4 matrices 4×5.

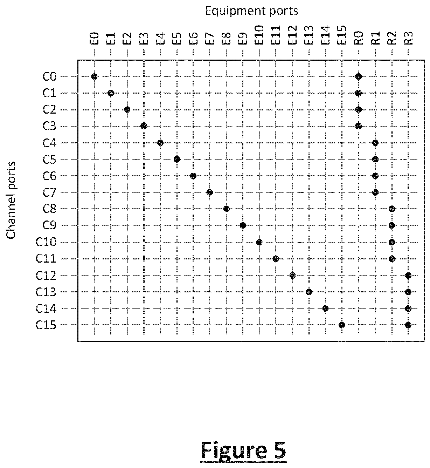

La figure 5 représente une matrice de redondance 10 correspondant à celle de la figure 3 avec des modifications pour avoir une connectivité équivalente, mais avec un regroupement des équipements nominaux $E_j$ (20) dans les n premières colonnes et des équipements redondants $R_j$ (20') dans les $m - n$ dernières colonnes. La diagonale de cette matrice correspond à la diagonale nominale. La diagonale nominale comprend l'ensemble des points d'intersection de la matrice de redondance 10 entre chaque ligne correspondant à un canal $C_i$ d'indice donné $i$ et une colonne correspondant à un équipement nominal $E_i$ ayant le même indice $i$.

Il est à noter que la permutation de lignes ou de colonnes n'altère pas la connectivité décrite par la grille de connexion.

Une connexion entre un canal $C_i$ et un équipement $E_j$ sera notée ci-après $(C_i \leftrightarrow E_j)$. De même, une connexion entre un canal $C_i$ et un équipement redondant $R_j$ sera notée ci-après $(C_i \leftrightarrow R_j)$.

Ainsi, dans la configuration de matrice de la figure 5, les n premières colonnes de la matrice de redondance 10 correspondent aux équipements nominaux $E_j$ (20), tandis que les $m - n$ colonnes suivantes comprennent successivement les équipements redondants $R_{jk}$ (20'), avec $n = 16$ et $m - n = 4$. Les équipements nominaux $E_j$ (20) d'un même groupe d'équipements nominaux (i.e. associés à un même équipement redondant 20') sont eux-mêmes disposés les uns à la suite des autres et l'ordre des équipements redondants correspond à l'ordre des groupes d'équipements nominaux associés dans les n premières colonnes.

Une telle matrice de redondance 10 permet d'aiguiller tout canal $C_i$ (3) vers l'équipement redondant associé $R_k$ (20) à la 1$^{\text{ère}}$ panne, l'indice $k$ de l'équipement redondant correspondant étant donné par $k = \lfloor i/K \rfloor$ (dans l'exemple de la figure 5, $K = 4$), dans un schéma de redondance « $P$ pour $K$ ».

Il convient de noter qu'un tel aiguillage à la première panne est possible sans nécessiter de déconnecter d'autres équipements 20, ce qui satisfait aux contraintes liées aux anneaux de redondance selon lesquelles les canaux autres que celui correspondant à la voie en panne à la première panne ne doivent pas être déconnectés.

En supposant qu'une deuxième panne se produise alors sur un équipement $E_j$ dans un groupe d'équipements $G_q$ autre que le groupe $G_k$ associé à l'équipement redondant $R_k$, le canal $C_j$ peut être connecté à l'équipement redondant $R_q$ avec $q = \lfloor j/K \rfloor \neq k$ et rerouter ainsi les signaux du canal $C_j$ vers l'équipement redondant $R_l$.

Cependant, avec une telle configuration de matrice redondante, le canal $C_j$ ne peut pas être rerouté si un équipement $E_j$ tombe en panne appartenant au même groupe d'équipements $G_k$ que celui associé à $R_k$, car un tel équipement est associé au même équipement redondant.

La matrice de redondance 10 peut être configurée pour permettre le reroutage de deux canaux associés à deux équipements d'un même groupe d'équipements vers un équipement redondant pour l'un des canaux et vers un équipement voisin déterminé selon le principe du glissement (l'équipement voisin sera lui-même routé vers son équipement voisin et ainsi de suite jusqu'à ce que l'équipement redondant du groupe suivant soit atteignable). Une telle matrice de redondance, appelée ci-après « matrice de redondance à glissement » est configurée pour faire « glisser » tous les canaux $C_i$ associés à un autre équipement $E_j$, du même groupe $G_k$ d'indice supérieur à celui du premier équipement $E_j$ en panne vers l'équipement voisin $E_{j'+1}$ et pour aller chercher l'équipement redondant du groupe d'équipements voisin $G_{k+1}$ en cas de panne de l'équipement $E_j$, du même groupe, en ajoutant des points de connexion. Ainsi, si un premier équipement $E_j$ tombe en panne dans un groupe $G_k$ associé à un équipement redondant $R_k$, les canaux $C_j$, associés aux autres équipement $E_j$, du même groupe, d'indice $j' > j$, se connecteront à l'équipement voisin $E_{j'+1}$ d'indice suivant $j' + 1$ en cas de panne de l'équipement $E_j$, de manière à être rerouté vers l'équipement redondant du groupe d'équipements voisin $G_{k+1}$ grâce à l'ajout de points de connexion auxiliaires entre $C_{j'}$ et $E_{j'+1}$.

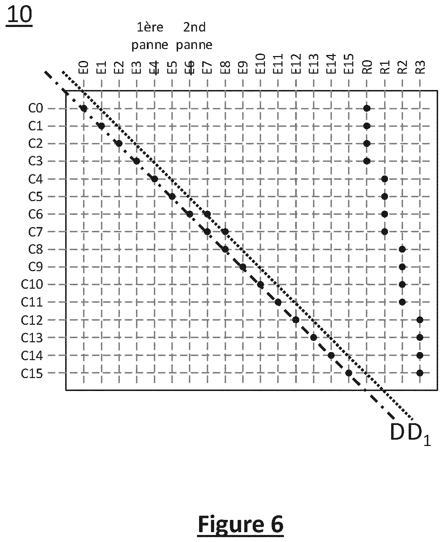

La figure 6 illustre une matrice de redondance à glissement 10 de taille 16×20 composée de 4 matrices 4×5. Elle montre l'ajout de points de connexion dans la matrice de redondance 10 pour assurer la continuité de service en cas de seconde panne spécifique.

Dans cet exemple, il est considéré qu'une première panne se produit dans un état initial tel que $i = 4$ est l'indice de la première panne (panne sur l'équipement $E_4$ associé au canal $C_4$), puis ultérieurement qu'une deuxième panne d'indice $j = 6$ se produit (panne sur l'équipement $E_6$ associé au canal $C_6$). Les deux équipements en panne $E_4$ et $E_6$ appartiennent au même groupe $G_1$ de 4 équipements associés à un même équipement redondant $R_1$. Ainsi, tous les équipements du groupe $G_1$ (soit $E_4$, $E_5$, $E_6$ et $E_7$) sont initialement configurés pour être connectés à l'équipement redondant $R_1$ en cas de panne de l'un d'entre eux. Cependant, ce mode de réalisation avec matrice de redondance à glissement 10 permet de modifier la connexion active entre un canal et un équipement dans le cas où une panne se produit successivement sur plus d'un équipement d'un même groupe. Ainsi, lors de la première panne sur $E_4$, la connexion active $(C_4 \leftrightarrow E_4)$ devient le point $(C_4 \leftrightarrow R_1)$. Puis lors de la deuxième panne, en ajoutant les points de connexion $(C_6 \leftrightarrow E_7)$ et $(C_7 \leftrightarrow E_8)$ par décalage des équipements $E_6$ et $E_7$ d'indice supérieur à $i = 6$ dans le groupe $G_1$ vers les équipements suivants $E_7$ et $E_8$, et en les activant, le canal $C_6$ se connecte sur $E_7$ (au lieu de $E_6$), le canal $C_7$ sur $E_8$ (au lieu de $E_7$) et finalement le canal $C_8$ vers $R_2$. Les points de connexion ajoutés permettent ainsi de réaliser un glissement de proche en proche des canaux vers le prochain équipement redondant $R_2$.

La matrice de redondance 10 peut ainsi être améliorée pour permettre le traitement de deux pannes survenant successivement sur deux équipements au sein d'un même groupe d'équipements en généralisant par récurrence le procédé de glissement.

Ainsi, dans une forme de réalisation, la matrice de redondance 10 présente une diagonale voisine $D_1$ de la diagonale nominale D, pleine (c'est-à-dire que tous les points de la diagonale voisine à la voisine nominale correspondent à des points de connexion additionnels pouvant être activés entre un canal $C_i$ et un équipement $E_{i+1}$ voisin d'un équipement connecté $E_i$ au même canal sur la diagonale nominale).

La matrice de redondance comprend alors des connexions $(C_i \leftrightarrow E_i)$ sur la diagonale nominale $D$ et des connexions auxiliaires $(C_i \leftrightarrow E_{(i+1) \bmod N})$ sur la diagonale voisine $D_1$ pour toutes les valeurs de i comprises entre 0 et $N - 1$.

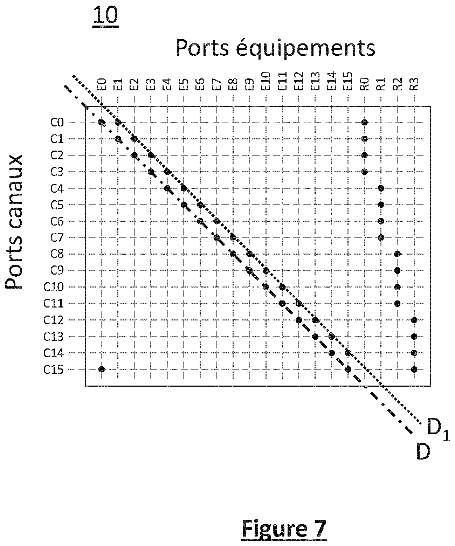

La figure 7 représente une matrice de redondance avec glissement comprenant une diagonale nominale D et une diagonale voisine $D_1$ pleine, selon un mode de réalisation de l'invention. La matrice de redondance 10 est de dimension $16 \times 20$ et est composée de quatre sous-matrices de dimension $4 \times 5$ interconnectées.

Il peut être observé que dans la diagonale voisine $D_1$, un point de connexion est ajouté entre le dernier canal d'indice le plus grand $C_{15}$ et le premier équipement d'indice le plus petit $E_0$ $(C_{15} \leftrightarrow E_0)$ afin de permettre un glissement du dernier groupe $G_4$ de quatre équipements $(E_{12}, E_{13}, E_{14}, E_{15})$, associé au dernier équipement redondant d'indice le plus grand $R_3$, vers le premier groupe $G_1$, associé au premier équipement redondant $R_0$, refermant ainsi la boucle des glissements.

Dans un autre mode de réalisation, la matrice de redondance 10 peut encore être améliorée pour permettre le traitement de plus de deux pannes survenant successivement sur trois équipements au sein d'un même groupe d'équipements en appliquant de nouveau une généralisation par récurrence du procédé de glissement.

Plus précisément, dans une forme de réalisation, la matrice de redondance 10 peut présenter $L$ diagonales voisines $D_l$ de la diagonale nominale, pleines, avec $L = e - 1$ ($L$ désigne le nombre de diagonales voisines, sans la diagonale nominale).

Pour la $l$ - $ième$ diagonale voisine $D_l$, tous les points de la diagonale voisine $D_l$ correspondent à une connexion additionnelle entre un canal $C_i$ et un équipement voisin $E_{i+l}$ d'un équipement connecté $E_i$ au même canal $C_i$ sur la diagonale nominale $D$.

La matrice de redondance comprend alors des connexions $(C_i \leftrightarrow E_i)$ sur la diagonale nominale et des connexions auxiliaires $(C_i \leftrightarrow E_{(i+l) \bmod N})$ sur chaque diagonale voisine $D_l$ pour toutes les valeurs de i comprises entre 0 et n - 1.

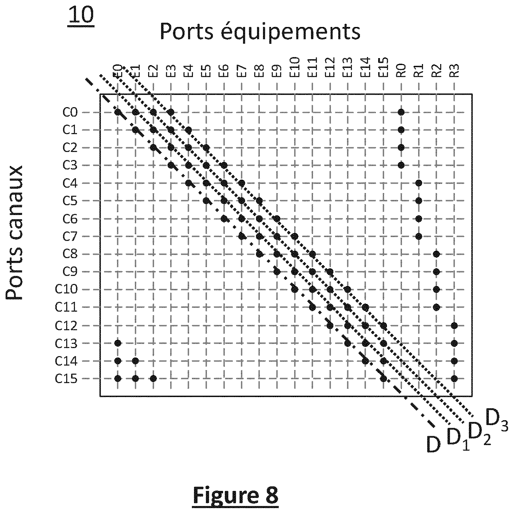

La figure 8 représente une matrice de redondance avec glissement comprenant une diagonale nominale $D$ et trois diagonales voisines pleines $D_1$, $D_2$ et $D_3$, selon un mode de réalisation de l'invention. La matrice de redondance 10 est de dimension $16 \times 20$ et est composée de quatre sous-matrices de dimension $4 \times 5$ interconnectées. Quatre équipements redondants sont utilisés $R_0$, $R_1$, $R_2$, et $R_3$. La matrice de redondance de la figure 8 permet de rerouter les canaux vers des équipements redondants même lorsque 4 pannes se produisent successivement sur les équipements d'un même groupe.

La matrice de redondance 10 ainsi réalisée est parfaite, ce qui signifie que pour n'importe quelle combinaison de pannes de $K$ équipements ($K$ inférieur ou égal au nombre d'équipements redondants), il existe une configuration de la matrice de redondance garantissant une continuité de service du système en reroutant tous les canaux associés aux équipements défaillants vers un équipement fonctionnel (équipement redondant).

Une matrice $N \times M$ parfaite supporte par définition toute combinaison de $M - N$ pannes parmi les $M$ équipements (sans distinction entre équipements nominaux et redondants). Par exemple, la matrice $16 \times 20$ de la figure 8 supporte toute combinaison de 4 pannes parmi les 20 équipements et une matrice $27 \times 30$ parfaite supporte toute combinaison de 3 pannes.

Contrairement aux solutions existantes, l'utilisation d'une telle matrice de redondance par le système 100 permet de minimiser la dissymétrie du nombre de commutateurs (« switchs ») traversés entre chemins, quel que soit le nombre de pannes. Elle permet en outre de distribuer les accès d'équipements redondants $R_k$ dans la matrice de redondance de telle sorte que la matrice présente un découpage par briques élémentaires, permettant une architecture mécanique modulaire.

En effet, la matrice de redondance selon les modes de réalisation de l'invention est utilisée pour réaliser une implémentation matérielle (circuit) sous la forme d'un agencement de commutateurs miniaturisés montés sur des cartes de circuits imprimés. La surface d'un circuit imprimé peut être insuffisante pour accommoder l'ensemble du circuit (et notamment l'ensemble des commutateurs). Le circuit peut être alors réalisé en utilisant plusieurs cartes distinctes, elles-mêmes potentiellement montées dans des structures mécaniques distinctes en utilisant le découpage en briques élémentaires.

Une brique élémentaire correspond à un sous-ensemble du circuit complet implémentant la matrice de redondance.

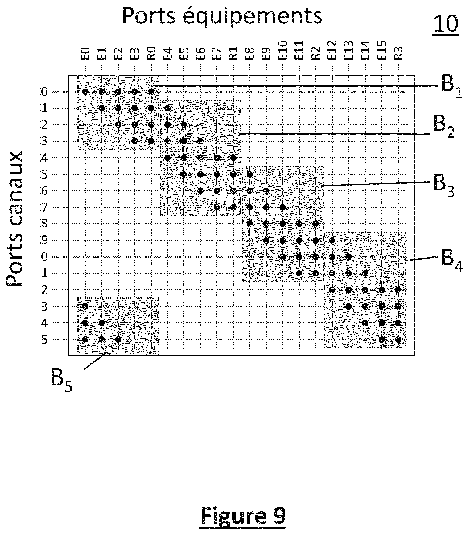

La figure 9 illustre un tel découpage d'une matrice de redondance 16x20 à glissement, en quatre briques rectangulaires élémentaires $B_1$, $B_2$, $B_3$ et $B_4$, selon un exemple de réalisation. Une brique rectangulaire est formée autour des connexions contiguës associées à chaque groupe d'équipements. Un groupe d'équipements peut être associé à deux briques élémentaires.

Avantageusement, les briques élémentaires requièrent un nombre d'interconnexions limité (nombre de câbles RF limité) et utilisent une topologie d'interconnexion sous la forme d'une boucle simple (B1 → B2 → B3 → B4 → B1), ce qui permet l'utilisation de câbles courts.

Plus précisément, le nombre d'interconnexions entre une brique Bk et la suivante Bk+1 est égal au nombre de diagonales à glissement (*e* - 1).

Le découpage en brique élémentaire permet en outre une optimisation du coût de développement non-récurrent. Plutôt que de développer un nouveau produit pour chaque dimension de matrice de redondance, un ensemble de briques élémentaires construites peuvent être simplement assemblées pour des utilisations ultérieures.

Il est à noter qu'une carte de circuit imprimé peut dans certains cas être suffisamment large pour accommoder plusieurs briques. Par exemple, un PCB ('Printed Circuit Board' ou Carte de Circuit Imprimé) peut intégrer les briques B1 et B2 et un autre PCB peut intégrer les briques B3 et B4. Cependant, dans de tels cas, il est avantageux de minimiser le nombre d'interconnexions entre les briques B2 et B3 et entre B4 et B1.

Les grilles de connexion décrivent une connectivité, et non un agencement mécanique (la permutation de lignes ou de colonnes n'affecte pas cette connectivité). Les équipements redondants 20' peuvent être représentés à la fin de la grille de connexion (dernières colonnes sur les figures) pour mettre en valeur les diagonales. Sur la figure 9, les équipements redondants 20' sont distribués parmi les équipements nominaux 20 pour mettre en valeur les briques élémentaires.

Pour optimiser encore la structure de la matrice de redondance 10, dans des modes de réalisation, une matrice de redondance 10 peut être sous-peuplée, en supprimant des points de connexion, ce qui permet de simplifier l'implémentation matérielle des commutateurs *SPnT,* et ainsi de réduire la complexité de la matrice de redondance.

Dans la suite de la description, il sera fait référence au taux de perfection d'une matrice de redondance.

Dans des applications générales de l'invention, l'évènement de reconfiguration de la matrice de redondance est le changement de l'ensemble exclu (dans une application de l'invention à la gestion de pannes, l'exclusion d'un équipement est déclenchée par une panne de cet équipement).

Une matrice est parfaite si pour tout sous-ensemble d'équipements exclus elle est capable de connecter chaque canal vers un équipement non-exclu (sous réserve qu'il y ait au moins autant d'équipements non-exclus que de canaux).

Tel qu'utilisé ici, le taux de perfection $PL_k$ d'une matrice de redondance 10 à n entrées et m sorties est défini par :

$$PL_k = \frac{|\{\text{combinaisons de k exclusions couvertes}\}|}{|\{\text{combinaisons de k exclusions}\}|}$$

Soit :

$$PL_k = \frac{|\{\text{combinaisons de k exclusions couvertes}\}|}{c_M^k} \quad (1)$$

Par exemple, dans une application de l'invention à la gestion de pannes, le taux de perfection d'une matrice de redondance 10 désigne le nombre de pannes couvertes par la matrice de redondance, divisé par le nombre total de pannes possibles. La matrice est dite « parfaite » lorsque ce nombre est égal à 1.

Ainsi, dans cet exemple d'application de l'invention à la gestion de pannes, pour une matrice de redondance à n entrées et m sorties, le taux de perfection $PL_k$ à la $k$ème panne est défini comme :

$$PL_k = \frac{|\{\text{combinaisons de k pannes couvertes}\}|}{|\{\text{combinaisons de k pannes}\}|} = \frac{|\{\text{combinaisons de k pannes couvertes}\}|}{c_M^k}$$

Un sous-peuplement de la matrice de redondance 10 pourrait dans certains cas dégrader le taux de perfection de la matrice mais avec une diminution très progressive de la fiabilité du sous-système constitué par un ensemble d'équipements, incluant équipements nominaux 20 et équipements redondants 20', encadrés de deux matrices de redondance 10 selon des modes de réalisation de l'invention.

Cependant, une matrice de redondance 10 sous-peuplée, permet une simplification matérielle et donc une diminution du coût et donc un bon compromis taux de perfection/complexité de la structure matérielle de la matrice de redondance.

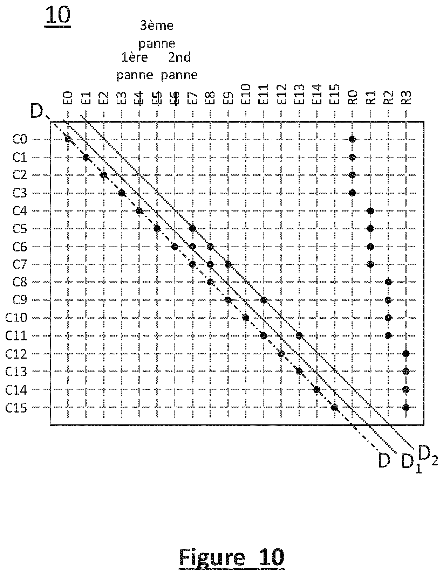

La figure 10 représente une matrice de redondance à glissement de dimension $16 \times 20$, selon un autre exemple, configurée pour gérer 3 pannes spécifiques. Cette matrice de redondance 10 permet d'illustrer les points de connexion pouvant être supprimés pour mettre en oeuvre le mode de réalisation de matrice de redondance avec glissement et sous-peuplement. La matrice de redondance de la figure 10 est obtenue à partir de la structure de matrice de la figure 6 (gestion de deux premières pannes sur $E_4$ et $E_6$), en ajoutant en plus des points de connexion selon le procédé de glissement pour assurer la continuité de service en cas de 3ème panne sur $E_5$ :

- le canal $C_4$ est rerouté sur $R_1$ pour la 1ère panne sur $E_4$ ;

- pour la 2ème panne sur $E_6$, le canal $C_6$ est rerouté sur $E_7$, C7 est rerouté sur $E_8$, puis $C_8$ est rerouté sur $R_2$, grâce à l'ajout et à l'activation des connexions $(C_6 \leftrightarrow E_7)$, $(C_7 \leftrightarrow E_8)$ et $(C_8 \leftrightarrow R_2)$ pour gérer une 2ème panne ; ainsi $R_2$ compense la perte de l'équipement $E_6$ ;

- pour la 3ème panne sur $E_5$, le canal $C_5$ est rerouté sur $E_7$, $C_7$ est rerouté sur $E_9$, $C_9$ est rerouté sur $E_{11}$, $C_{11}$ est rerouté sur $E_{13}$ et enfin $C_{13}$ est rerouté sur $R_3$ grâce à l'ajout et à l'activation des connexions $(C_5 \leftrightarrow E_7)$, $(C_7 \leftrightarrow E_9)$, $(C_9 \leftrightarrow E_{11})$, $(C_{11} \leftrightarrow E_{13})$ et $(C_{13} \leftrightarrow R_3)$ pour gérer une troisième panne.

Les noeuds $(C_6 \leftrightarrow E_7)$, $(C_7 \leftrightarrow E_8)$ et $(C_8 \leftrightarrow R_2)$ liés à la 2ème panne vont être remplacés par les noeuds $(C_6 \leftrightarrow E_8)$ et $(C_8 \leftrightarrow R_2)$ pour permettre au noeud $(C_5 \leftrightarrow E_7)$ d'être établi.

Il est à noter que ces ajouts de connexions font apparaître une troisième diagonale voisine $D_2$ plus haute que la deuxième diagonale voisine $D_1$.

Dans la forme de réalisation de matrice de redondance 10 avec glissement et sous-peuplement, les points de connexion correspondant aux connexions ajoutées à la deuxième panne sur $E_6$, soit les points $(C_6 \leftrightarrow E_7)$ et $(C_7 \leftrightarrow E_8)$ peuvent être avantageusement supprimés, tout en conservant la capacité de la matrice de redondance à gérer la 2ème et la 3ème panne à l'aide des points de connexion ajoutés pour la 3ème panne.

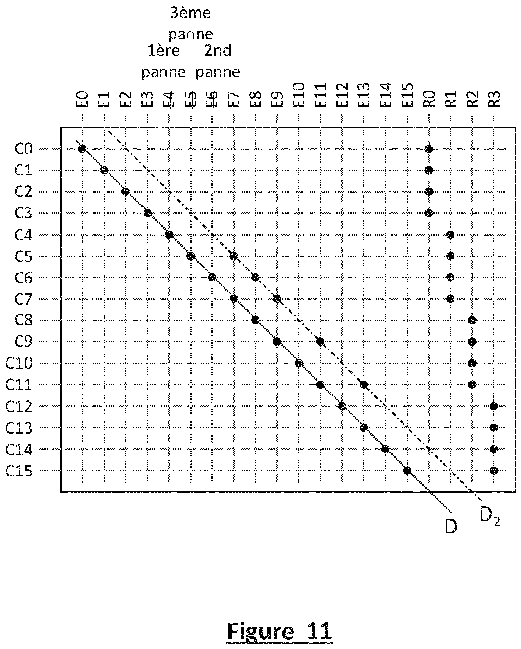

Les figure 11 illustre une telle simplification de la matrice de redondance (de dimension 16x20 composée de 4 sous-matrices 4x5 interconnectées).

La figure 11 met en évidence l'importance de la diagonale haute $D_3$,. Une telle diagonale a un poids prépondérant sur le taux de perfection.

Dans les modes de réalisation de l'invention, le dépeuplement de la matrice de redondance ne concerne ainsi que les diagonales intermédiaires, qui peuvent être ainsi au moins partiellement supprimées, tandis que la diagonale la plus haute est conservée.

La figure 11 montre la suppression des points $(C_6 \leftrightarrow E_7)$ et $(C_7 \leftrightarrow E_8)$, les points de connexions ajoutés par glissement pour gérer une 3ème panne (ici sur $E_5$) permettant de gérer la 2nd panne (ici sur $E_6$). Pour gérer la 3ème panne :

- l'équipement $E_6$ est indirectement remplacé par $R_2$, lors d'une 2ème panne sur $E_6$ grâce à l'ajout et à l'activation de la connexion $(C_6 \leftrightarrow E_8)$ et de la connexion $(C_8 \leftrightarrow R_2)$ ajoutées pour gérer une 3ème panne (le canal $C_6$ se connecte sur $E_8$ et le canal $C_8$ sur $R_2$ ) ;

- l'équipement $E_5$ est indirectement remplacé par $R_3$, pour la 3ème panne sur $E_5$ grâce à l'ajout et à l'activation des connexions $(C_5 \leftrightarrow E_7)$, $(C_7 \leftrightarrow E_9)$, $(C_9 \leftrightarrow E_{11})$, $(C_{11} \leftrightarrow E_{13})$ et $(C_{13} \leftrightarrow R_3)$ ; ainsi, lors de la 3ème panne, le canal $C_5$ se connecte sur $E_7$, le canal $C_7$ sur $E_9$, le canal $C_9$ sur $E_{11}$, le canal $C_{11}$ sur $E_{13}$, ce qui amène à la connexion du canal $C_{13}$ qui est connecté à $R_3$.

Ainsi dans des modes de réalisation, la matrice de redondance 10 peut avoir des diagonales creuses telle qu'à nombre égale de diagonales, les diagonales $D_l$ les plus « hautes » (de rang $l$ supérieurs) permettent de couvrir un nombre supérieur de pannes que les diagonales voisines de rang inférieur (de rang $l$ supérieurs).

Les matrices de redondances 10 dans lesquelles des diagonales voisines de rang intermédiaire *l* sont supprimées entièrement ou partiellement ($1 \leq l < L$ où *L* est le nombre total de diagonales voisines) seront appelées ci-après «matrice de redondance à glissement et à diagonale creuse» ou «matrice de redondance à glissement sous-peuplée» (i.e. matrices de redondance dans lesquelles des diagonales voisines de rang intermédiaire *l* ne sont pas complètement remplies de noeuds).

De telles matrices de redondance à glissement et à diagonale creuse ne sont pas parfaites. En effet, elles ont un taux de perfection strictement inférieur à 1. Cependant, la suppression de diagonales intermédiaires, plutôt que la diagonale voisine « haute », correspondant à la diagonale $D_L$ de plus haut rang *L*, permet d'obtenir des matrices à taux de perfection supérieur.

Les modes de réalisation fournissent ainsi une matrice de redondance à glissement 10 définissant des points de connexions d'une part entre les canaux (lignes de la matrices) et les équipements nominaux et d'autre part entre canaux et équipements redondants pour le reroutage d'un canal 3 vers un équipement redondant 20' en cas d'un ou plusieurs pannes des équipements nominaux 20.

La « Matrice de Redondance à Glissement » permet ainsi de définir la connectivité du système 100, c'est-à-dire l'ensemble de connexions permises entre les accès canaux 3 et les accès équipements 20/20'. Cette connectivité décrite par le positionnement de noeuds de connexion dans la grille de connexion représentant la matrice et peut être critique puisqu'elle détermine le compromis entre la complexité du système et la fiabilité du système.

La complexité de la matrice de redondance, en termes de nombre de commutateurs *SPnT* correspondant à une connexion, est directement proportionnelle au nombre de noeuds de connexion dans la grille de connexion. En optimisant le nombre de connexions dans la grille de connexion représentant la matrice de redondance 10, le nombre de commutateurs *SPnT* utilisés pour gérer les pannes d'équipements est optimisé.

Par ailleurs, la connectivité représentée par la grille de connexion associée à la matrice de redondance 10 détermine l'ensemble des combinaisons de pannes d'équipements que la matrice de redondance 10 est capable de supporter. Un nombre insuffisant de noeuds de connexions ou un placement non-optimal des noeuds pourrait dégrader fortement la fiabilité au niveau de la charge utile.

La matrice de redondance peut appartenir à deux catégories de matrices de redondance à glissement :

- les matrices parfaites, et

- les matrices non-parfaites.

Une matrice parfaite est configurée pour supporter toutes les combinaisons de pannes et a une connectivité bien définie.

Les matrices non parfaites s'obtiennent à partir des matrices parfaites en adaptant deux paramètres :

- Un premier paramètre correspondant à un paramètre de modulation de complexité défini pour moduler la complexité de la matrice (nombre de noeuds de connexion),

- Un deuxième paramètre correspondant à un paramètre relatif au taux de perfection défini pour adapter le taux de perfection de la matrice (pourcentage de cas de pannes couverts) au besoin.

Pour décrire une matrice de redondance à glissement, différentes catégories de chemins qui composent la matrice sont distinguées :

- les chemins nominaux,
- les chemins redondants, et
- les chemins à glissement.

Un chemin nominal de la matrice de redondance est utilisé en l'absence de pannes sur l'équipement pour connecter chaque canal 3 à son équipement nominal 20. Sur la grille de connexion représentant la matrice de redondance, un chemin nominal comprend l'ensemble de points de connexions $(C_i \leftrightarrow E_i)$, formant une première diagonale pleine *D*, correspondant à la diagonale nominale (un chemin nominal comprend chaque connexion entre un canal $C_i$ d'indice donné *i* et l'équipement $E_i$ de même indice).

Un chemin redondant permet à chaque canal 3 d'accéder à un seul des équipements redondants 20' (il n'y a donc qu'un seul noeud redondant par ligne). Un noeud redondant est un noeud de connexion entre un canal 3 et un équipement redondant 20'. Sur la grille de connexion représentant la matrice de redondance 10, un chemin redondant comprend l'ensemble de points de connexions $(C_i \leftrightarrow R_j)$ entre un canal $C_i$ et un équipement $R_j$. Par construction, un chemin redondant se situe sur la partie droite de la matrice de redondance.

Cependant, la position des colonnes des éléments redondants 20' (ordre des éléments redondants) dans la grille de connexion n'affecte pas la connectivité de la matrice sous-jacente (comme montré sur la figure 8), c'est-à-dire que l'ordre des lignes et des colonnes n'impacte pas la connectivité de la matrice.

Lorsque des pannes surviennent, les chemins redondants sont privilégiés puisqu'ils n'entrainent pas d'interruptions transitoires des canaux voisins lors de la reconfiguration.

Un chemin à glissement permet de couvrir un ensemble de combinaisons de pannes plus large. Les chemins à glissement permettent l'exploitation d'équipements redondants 20' situés loin des équipements en panne grâce à un phénomène de glissement de proche en proche. Sur la grille de connexion correspondant à la matrice de redondance 10, ils forment les diagonales voisines supplémentaires $D_l$, qui peuvent être plus ou moins pleines et qui se positionnent au-dessus de la diagonale nominale $D$. Sur la grille de connexion représentant la matrice de redondance 10, un chemin à glissement comprend l'ensemble de points de connexions ($C_i \leftrightarrow E_j$) entre un canal $C_i$ et un équipement $E_j$, avec $E_j$ appartenant à une diagonale voisine $D_l$.

Une diagonale voisine $D_l$ pleine comporte l'ensemble des points de connexion ($C_i \leftrightarrow E_{i+l \bmod n}$).

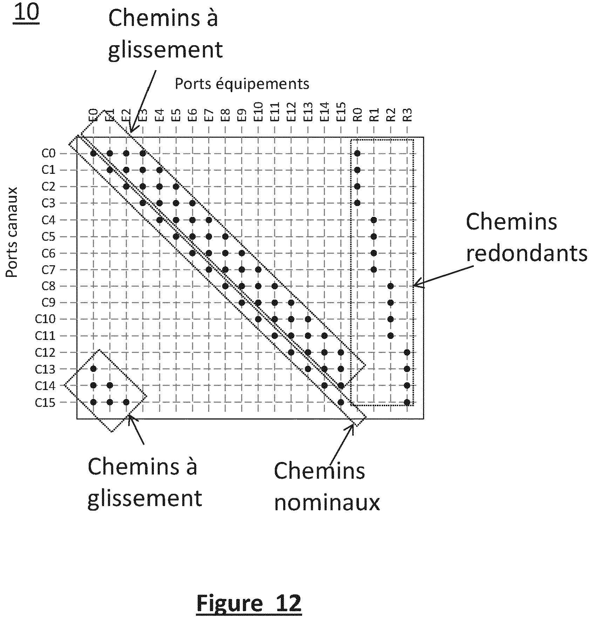

La figure 12 illustre les 3 types de chemins de noeuds de connexion dans un exemple de matrice de redondance 10 de dimensions 16×20, parfaite.

La matrice de redondance 10 présente plusieurs degrés de liberté pour positionner des noeuds de connexion pour une dimension de matrice donnée (pour un nombre de canaux 3 et d'équipements donnés 20), de tels noeuds de connexion servant à rerouter les canaux 3 vers des équipements redondants 20' ou vers d'autres équipements nominaux 20 (chemins à glissement), dans le cas où une ou plusieurs pannes se produisent sur les équipements 20 du système 100.

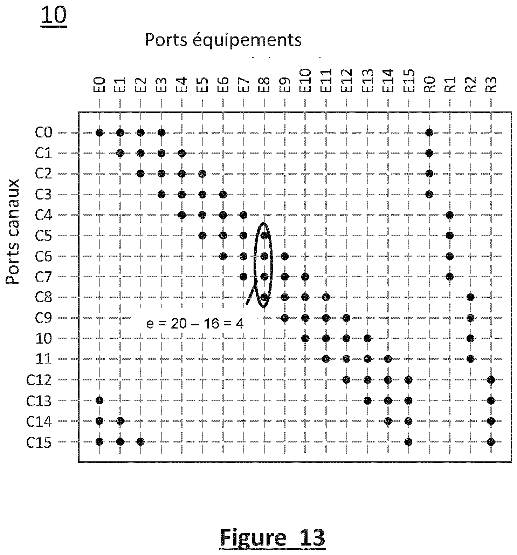

La définition d'une matrice de redondance à glissement 10 est associée à une capacité de glissement, noté $e$, représentant l'épaisseur de la diagonale formée par les chemins nominaux et les chemins à glissement, comme illustré par la figure 13.

Le nombre total de diagonales (nominales et voisines) est ainsi égal au paramètre $e$. Ainsi, le nombre de diagonales voisines est égal à $L = e - 1$.

Selon les modes de réalisation de l'invention, une matrice $n \times m$ est parfaite si sa capacité de glissement e doit satisfaire la condition :

$$e \geq m - n \quad (2)$$

En particulier, une matrice $n \times m$ de capacité de glissement $e = m - n$ est parfaite si et seulement si toutes ses diagonales de chemins à glissement sont pleines.

Pour que des chemins à glissement existent dans la matrice de redondance 10 et que la matrice soit de type matrice à glissement, la capacité $e$ est supérieure ou égale à 2.

Pour que la matrice soit décomposable en briques élémentaires chaînables, la capacité de glissement e est inférieure ou égale à $\lfloor n/(m - n) \rfloor$.

Les modes de réalisation de l'invention fournissent ainsi une matrice de redondance de dimension $n \times m$ ayant une capacité de glissement e vérifiant la condition :

$$2 \leq e \leq \left\lfloor \frac{n}{m-n} \right\rfloor \quad (3)$$

Dans l'exemple de la figure 13, cette condition est satisfaite, la capacité e étant égale à 4 ($e = 20 - 16$ permet à la matrice d'être parfaite).

La borne supérieure de l'inéquation (3) permet d'éviter un nombre trop élevé de diagonales qui rendrait possible des glissements au-delà du groupe suivant (vers $G_{k+2}$ par exemple).

Le nombre $L$ désignant le nombre de diagonales voisines, sans la diagonale nominale (avec $L = e - 1$), vérifie alors :

$$1 \leq L \leq \left\lfloor \frac{n}{m-n} \right\rfloor - 1 \quad (4)$$

Une matrice à glissement est en outre définie par l'allocation des équipements redondants 20'.

Bien qu'il soit avantageux pour optimiser le découpage de la matrice en briques élémentaires de répartir par blocs et de façon équitable les canaux $C_i$ parmi les équipements redondants (par exemple 4 canaux par équipements redondants pour une matrice de dimension 16×20), une matrice à glissement peut néanmoins être parfaite malgré une répartition irrégulière des canaux parmi les équipements redondants 20' (le nombre de canaux par équipement redondant peut varier d'un équipement redondant à l'autre). Ainsi, il suffit que chaque équipement redondant 20' soit connectable à au moins un canal 3, c'est-à-dire qu'aucune des colonnes associées aux équipements redondants 20' ne soit vide (i.e. que chaque colonne associée à un équipement redondant 20' comprenne au moins une connexion avec un canal 3).

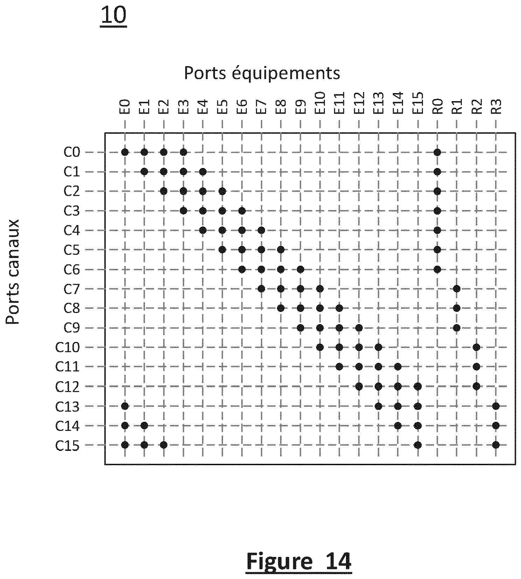

La figure 14 représente un exemple de matrice de redondance à glissement parfaite, de dimension 16x20, malgré une répartition irrégulière des associations canaux 3 et équipements redondants 20' : $R_0$ est associé aux premiers 7 canaux ($C_0$, $C_1$, ..., $C_6$), tandis que chaque équipement redondant $R_1$ à $R_3$ est associé à 3 canaux ($R_1$ à $C_7$-$C_9$, $R_2$ à $C_{10}$-$C_{12}$ et $R_3$ à $C_{13}$-$C_{15}$).

Une autre caractéristique ajustable de la grille de connexion associée à une matrice de redondance à glissement 10 est le degré de remplissage de la diagonale générale délimitée par la diagonale nominale $D$ et la diagonale voisine de rang le plus élevé $L$. Afin d'optimiser la complexité de l'implémentation matérielle d'une matrice de redondance, des noeuds situés entre la diagonale des chemins nominaux (diagonale nominale $D$) et la diagonale des chemins à glissement de rang le plus élevé (diagonale haute $D_L$) peuvent être supprimés ou dépleuplées partiellement (quelques noeuds seulement peuvent être retirés des diagonales intermédiaires $D_l$ avec $l$ compris entre 1 et $L$ - 1).

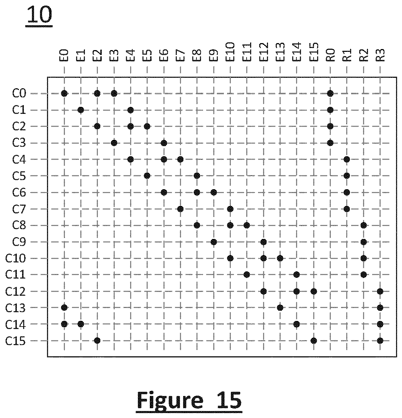

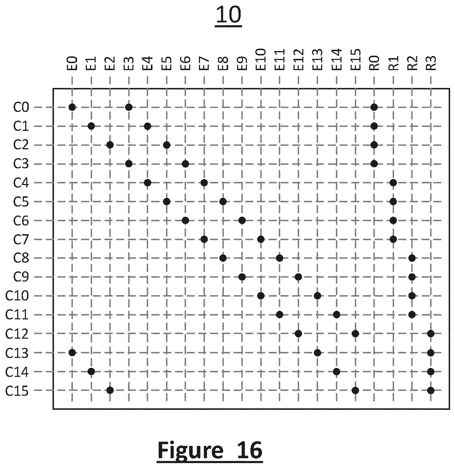

La figure 15 illustre un cas intermédiaire de remplissage tandis que la figure 16 illustre un cas de remplissage minimal pour mettre en évidence le compromis entre la fiabilité de la matrice de redondance et la complexité de la matrice de redondance (exprimée ici pour une implémentation à base de commutateurs SPDT).

Un cas de remplissage maximal de matrice de redondance correspond à la figure 13, avec une complexité en nombre de commutateurs SPDT utilisés pour réaliser l'implémentation matérielle de la matrice de 124 (124 commutateurs SPDT) et un taux de perfection à la 4ème panne de $PL_4$= 100%, ce qui correspond à une matrice parfaite.

La figure 15 correspond à un remplissage intermédiaire de matrice de redondance à glissement (matrice creuse), de dimension 16x20, avec une complexité en nombre de commutateurs SPDT utilisés pour réaliser l'implémentation matérielle de la matrice de 76 (76 commutateurs SPDT) et un taux de perfection à la 4ème panne $PL_4$= 96,62%.

La figure 16 correspond ainsi à un remplissage minimum de matrice de redondance à glissement (matrice creuse), de dimension 16x20, avec une complexité en nombre de commutateurs SPDT utilisés pour réaliser l'implémentation matérielle de la matrice de 60 (60 commutateurs SPDT) et son taux de perfection à la 4ème panne est $PL_4$= 90,67%.

La diagonale des chemins à glissement la plus haute $D_L$ (de rang le plus élevé) a un rôle important pour les performances de la matrice. Dans des modes de réalisation préférés, la diagonale la plus haute $D_L$ (de rang le plus élevé) de la matrice de redondance est avantageusement pleine. Ainsi, même dans une configuration de matrice à remplissage minimum, la grille de connexion associée à la matrice de redondance peut avantageusement comprendre au moins la diagonale nominale $D$ des chemins nominaux et la diagonale $D_L$ des chemins à glissement haute.

Les modes de réalisation de l'invention fournissent un dispositif de connexion optimisé correspondant à l'implémentation matérielle d'une ou plusieurs matrices de redondance à glissement 10 représentée par une grille de connexion, le dispositif de connexion comprenant un ou plusieurs commutateurs SPnT en fonction de la grille de connexion.

La matrice de redondance 10 selon les modes de réalisation de l'invention est ainsi avantageusement compatible avec des commutateurs SPnT sans pour autant présenter les défauts rédhibitoires de l'art antérieur.

En particulier, la structure de matrice de redondance selon les modes de réalisation de l'invention présente une structure qui peut être régulière pour simplifier fortement l'équilibrage des chemins.

L'implémentation de la grille de connexion peut être effectuée avec un circuit en arbres de commutateurs SPnT, ce qui rend possible le réglage de la longueur, et donc de l'atténuation, de chaque chemin individuellement.

Des exemples de commutateurs SPnt comprennent, de manière non limitative, des commutateurs STDP, SP3T, SP4T ou SPnT.

Le nombre de commutateurs SPDT utilisé pour implémenter une grille de connexion $N \times M$ à $K$ noeuds est égal à $2K - N - M$.

Il est à noter que l'implémentation matérielle de la matrice de redondance n'est pas unique. Il existe en effet plusieurs degrés de liberté sur la construction des arbres de commutateurs.

Les équipements redondants 20' peuvent être répartis parmi les canaux pour permettre un découpage en briques élémentaires du système complet 100, ce qui est particulièrement avantageux :

- dans les situations où, pour des contraintes mécaniques, par exemple, la dimension du circuit imprimé utilisé pour l'implémentation de la matrice de redondance est trop limitée pour intégrer l'ensemble du système, le découpage optimisant alors l'implémentation avec un nombre d'interconnexions limitées entre briques ;

- pour développer des briques génériques, réutilisables, couvrant un large ensemble de besoins lorsqu'assemblées entre elles, ce qui optimise les coûts de développement.

La matrice de redondance est en outre adaptative. En effet, le taux de perfection de la matrice peut être modulé en ajustant l'épaisseur de la diagonale de la matrice et le degré de remplissage de la matrice de redondance. La complexité de l'implémentation matérielle de la matrice peut ainsi être optimisée pour répondre au mieux aux contraintes de fiabilité (par exemple dans le cas d'une application de l'invention à l'industrie spatiale, la fiabilité de la charge utile du système 100). Une telle granularité n'existe pas avec les matrices de redondance de l'art antérieur.

Les classes de matrices de redondance à glissement selon les modes de réalisation de l'invention sont ainsi définies par les paramètres $n/m/e$ (entiers) comprenant :

- Le paramètre $n$ qui désigne le nombre total d'accès canaux d'une matrice de redondance appartenant à la classe.

- Le paramètre $m$ qui désigne le nombre total d'accès équipements d'une matrice de redondance appartenant à la classe.

- Le paramètre $e$ qui désigne la capacité de glissement d'une matrice de redondance de la classe. Une telle grandeur représente, sur la grille de connexion de la matrice, l'épaisseur de la diagonale formée par les chemins nominaux et les chemins à glissement.

Selon les modes de réalisation de l'invention, les entiers $n$, $m$, et $e$ vérifient les conditions suivantes :

$$n > 0, \ m > n + 1, \ 2 \leq e \leq \left\lfloor \frac{n}{m-n} \right\rfloor \quad (5)$$

Ainsi, pour appartenir à la classe des matrices de redondance à glissement, l'épaisseur $e$ du bloc de diagonales, incluant la diagonale nominale, correspondant à la représentation graphique du nombre total de diagonales, doit satisfaire la condition (5).

La notation $\left\lfloor \frac{n}{m-n} \right\rfloor$ désigne la partie entière de $\frac{n}{m-n}$.

Une matrice de redondance à glissement $\{n/m/e\}$ est définie comme toute matrice de redondance à $n$ accès canaux et $m$ accès équipements dont la grille de connexion comprend :

- un ensemble de chemins nominaux, qui forment la 1$^{\text{ère}}$ diagonale dite « diagonale nominale » $D$, les chemins nominaux étant définis par :

$$\forall i \in [\![0; n-1]\!], \ C_i \text{ connectable à } E_i$$

- un ensemble de chemins redondants, répartis sur les $m$ - n équipements redondants 20' de sorte à ce que chaque canal $C_i$ soit connectable à un seul équipement redondant 20' et que chaque redondant soit connectable à au moins un canal et définis par :

$$\exists f: [\![0; n-1]\!] \to [\![0; m-n-1]\!] \text{ surjective } / \ \forall i \in$$

$$[\![0; n-1]\!], \ C_i \text{ connectable à } R_{f(i)}$$

La grille de connexion peut en outre comprendre un ensemble de chemins à glissement, qui forment au moins une « diagonale haute » $D_L$ pleine et optionnellement des « diagonales intermédiaires » $D_I$ partiellement remplies définis par :

$$\forall i \in [\![0; n-1]\!], \ C_i \text{ connectable à } E_{i+(e-1) \ modulo \ n}$$

$$Si \ e > 2, \ \exists S \subset [\![0; n-1]\!] \times [\![1; e-2]\!] \ / \ \forall (i,k) \in S, \ C_i \text{ connectable à } E_{i+k \ modulo \ n}$$

Dans un mode de réalisation, la fonction $f$ peut être surjective et croissante.

Dans un mode de réalisation, la matrice de redondance 10 peut être configurée de manière à atteindre l'optimum en terme de peuplement de la matrice de manière à obtenir une fiabilité cible pour le un sous-ensemble du système 100 constitué d'équipements nominaux 20 encadrés par une matrice de redondance d'entrée 10-A et une matrice de redondance de sortie 10-B, et d'équipements redondants associés 20'.

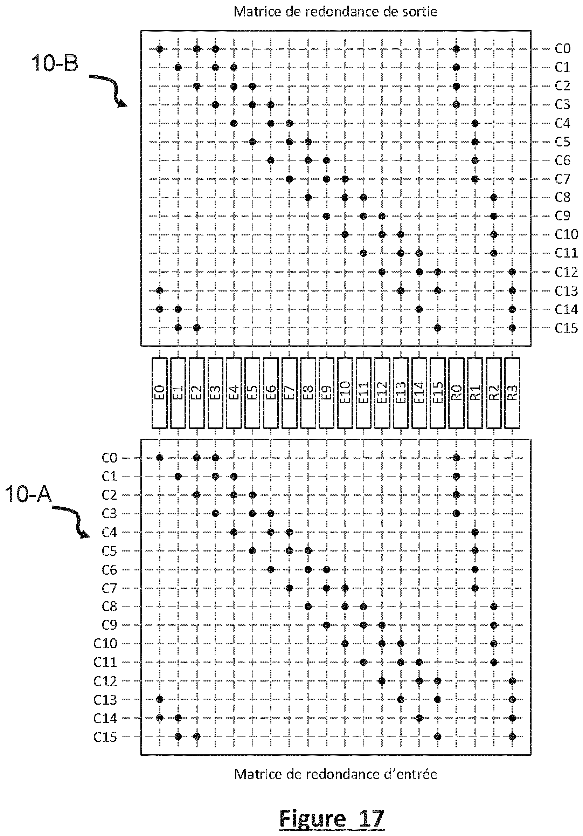

La figure 17 représente un tel sous-ensemble du système 100 comprenant des équipements nominaux ($E_0$ - $E_{15}$) et des équipements redondants 20 ($R_0$ - $R_3$) (sous-système) ainsi qu'une matrice de redondance d'entrée 10-A et une matrice de redondance de sortie 10-B.

Les inventeurs ont établi qu'il n'existe pas de niveau de dépeuplement optimal universel d'une matrice de redondance dans la mesure où la fiabilité du sous-système n'est pas fonction uniquement des taux de perfection de la matrice mais également de la fiabilité des équipements connectés à la matrice de redondance (nominaux et redondants).

La détermination de l'optimum de sous-peuplement d'une matrice de redondance 10 consiste à supprimer partiellement ou entièrement des diagonales intermédiaires d'une matrice de redondance en conservant la diagonale nominale D (« diagonale des nominaux ») et la diagonale de rang le plus élevé $D_L$ (« diagonale haute »). La suppression 'partielle' d'une diagonale intermédiaire correspond à la suppression de certains noeuds seulement de la diagonale intermédiaire.

Au moins une partie ou la totalité des diagonales intermédiaires $D_l$ (de rang $l < L$) peut être supprimée de la matrice de redondance 10.

À partir de la grille de connexion de chaque matrice de redondance 10 (qui comporte ainsi au moins la diagonale nominale $D$ et la diagonale haute $D_L$, pouvant être complétée par une ou plusieurs diagonales intermédiaires $D_l$), l'implémentation matérielle de la matrice de redondance 10 correspondante peut être réalisée à partir de la grille de connexion sous la forme d'un circuit (telle qu'utilisée ici, « l'implémentation » matérielle de la matrice de redondance 10 fait ainsi référence au circuit correspondant à la grille de connexion).

Dans un mode de réalisation, le circuit utilisé pour implémenter la matrice de redondance 10 peut être basé sur des arbres de commutateurs *SPnT*.

Il convient de noter que cette implémentation à base d'arbres de commutateurs n'est pas spécifique aux matrices de redondance à glissement et peut s'appliquer plus généralement à une matrice de redondance associée à tout type de grille de connexion quelconque.

Les arbres de commutateurs *SPnT* du circuit implémentant une matrice de redondance 10 peuvent être générés en prenant chaque accès de la matrice de redondance 10 comme racine de l'un des arbres (un « accès de la matrice de redondance » correspond à un accès canal (ligne) de la matrice ou un accès équipement de la matrice (colonne)). Ainsi, le circuit implémentant la matrice de redondance 10 peut comprendre un arbre par ligne et par colonne de la grille de connexion. Un arbre de commutateurs *SPnT* peut ainsi être construit au niveau de chaque accès canal ou équipement de la matrice, un accès canal/équipement étant connecté à la racine de l'arbre qui lui est associé.

Un arbre du circuit, implémentant la matrice de redondance 10, connecté à un accès canal peut avoir autant de branches qu'il y a de noeuds de connexion sur la ligne correspondante dans la grille de connexion.

Un arbre du circuit 10 dont la racine est connectée à un accès équipement peut avoir autant de branches qu'il y a de noeuds de connexion sur la colonne correspondante dans la grille.

La forme d'un arbre peut être variée. Le circuit 10 peut par exemple utiliser des arbres équilibrés ou des arbres non-équilibrés.

Chaque noeud dans la grille de connexion sur la ligne $L_i$ et la colonne $T_j$ correspond à une branche sur un arbre de commutateurs de racine connectée à $C_j$ et à une branche sur un arbre de commutateurs de racine connectée à $E_j$ ou $R_j$.

Ces deux branches sont reliées l'une à l'autre pour permettre la connexion $C_j \leftrightarrow E_j$ ou $R_j$.

L'ajout d'un noeud dans la grille de connexion sur une ligne $L_i$ et une colonne $T_j$ implique l'ajout d'une branche sur l'arbre de commutateurs de racine $C_i$ et sur l'arbre de commutateurs de racine $E_j$ (ou $R_j$).

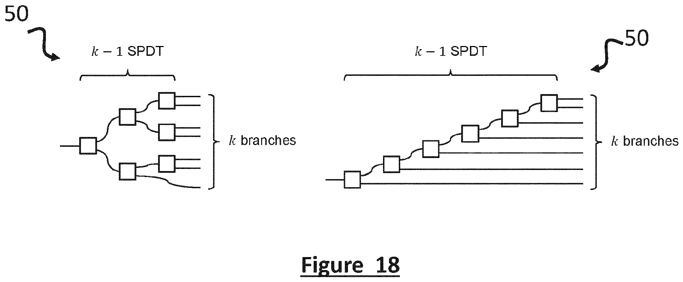

Des exemples d'arbres de commutateurs sont représentés sur la figure 18, dans le cas de commutateurs de type SPDT.

La figure 18 représente des exemples d'arbres 50 de commutateurs SPDT à k (($k$ - 1) *SPDT*) branches pouvant être utilisés dans une implémentation de la matrice de redondance à glissement 10.

Pour former le circuit 10, les chemins décrits par la grille de connexion sont ensuite implémentées en connectant les arbres des accès canaux aux arbres des accès équipements, branche à branche. La forme des branches des arbres à connecter entre elles peut varier.

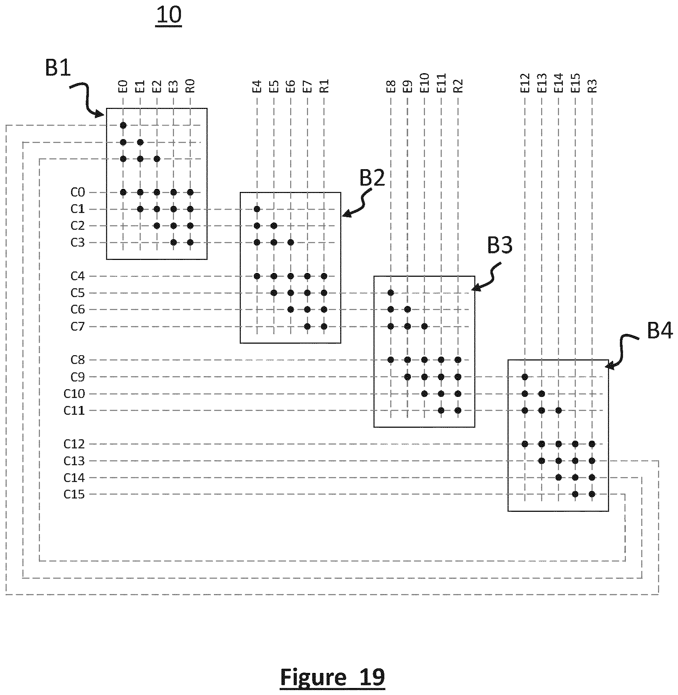

La figure 19 représente une matrice de redondance à glissement 16×20 parfaite 10. La matrice complète représentée sur la figure 19 peut être découpée en 4 briques élémentaires identiques B1, B2, B3 et B4.

La figure 19 met en évidence les interconnexions entre briques élémentaires et montre qu'il est avantageux de rattacher un équipement redondant à la brique de son groupe pour éviter de devoir créer de nouvelles interconnexions entre briques.

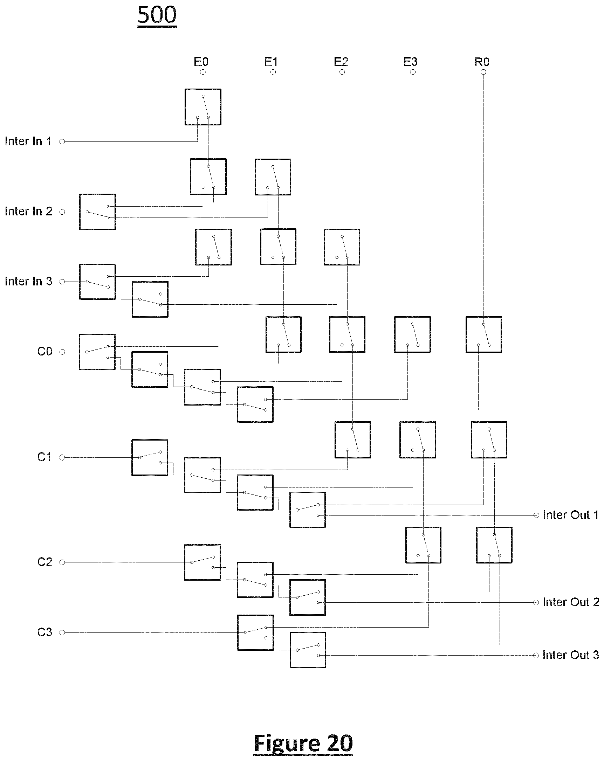

La figure 20 représente un exemple d'implémentation de la matrice de redondance à glissement 16×20 parfaite 10 représentée sur la figure 19, sous la forme d'un circuit comprenant des arbres de commutateurs *SPDT.*

Le circuit 500 de la figure 20 ne correspond qu'à la brique B1 et donc qu'à une partie du circuit final implémentant la matrice de redondance 10. L'implémentation des autres briques de la figure 19 est similaire en adaptant les accès canaux et équipements. Comme montré sur la figure 20, le circuit 500 comprend un arbre connecté à chaque accès canal $C_i$ avec autant de branches qu'il y a de noeuds sur la ligne correspondante dans la grille de connexion et un arbre connecté à un accès équipement $E_j$ ou $R_j$ avec également autant de branches qu'il y a de noeuds de connexion sur la colonne correspondante dans la grille.

Il est à noter qu'une sous-matrice d'une matrice de redondance ne dispose pas uniquement d'accès canaux et équipements mais peut également disposer d'accès d'interconnexion entrants $II_i$ (en lignes) et sortants $IO_i$ (en colonnes).

Certains arbres de commutateurs peuvent se retrouver à cheval entre deux sous-matrices (entre 2 PCB par exemple), c'est-à-dire que la racine et une partie de l'arbre sera sur la première carte et le reste sera sur l'autre, comme cela est visible sur la figure 20. Les accès d'interconnexion entrantes $II_i$ (« Inter In ») ne sont pas les racines des arbres (elles se situent sur la sous-matrice B4). De même, les derniers arbres ne s'arrêtent pas aux accès d'interconnexion sortantes (« Inter out ») mais continuent sur la sous-matrice B2. Ce découpage au milieu des arbres permet de minimiser le nombre d'interconnexions entre les sous-matrices.

Les commandes des commutateurs peuvent dépendre de l'implémentation et de la nature des commutateurs utilisés.

Dans un exemple de réalisation, lorsqu'un état de panne est détecté, un ensemble de noeuds peut être identifié dans la grille de connexion qui permette un nouveau routage valide, c'est-à-dire qui va associer à chaque canal un équipement opérationnel (équipement non en panne).

Différents algorithmes peuvent être utilisés pour permettre d'identifier un routage valide, s'il existe, pour un état de panne donné (par exemple algorithmes à base de théorie des graphes, de couplage maximum et/ou de graphes bipartis).

Une fois que les noeuds à utiliser sont identifiés, les commutateurs sont commandés, en fonction de la technologie propre du commutateur, de sa topologie et de sa position dans le circuit.

Dans les modes de réalisation à base d'arbres de commutateurs SPDT, un chemin peut être ensuite établi entre la racine de chaque arbre et la branche correspondant au noeud à utiliser dans la grille de connexion.

Avantageusement, les modes de réalisation de l'invention permettent d'obtenir une implémentation matérielle de matrice de redondance ayant une connectivité optimisée, c'est-à-dire une optimisation de l'ensemble des connexions canal-équipement qu'elles peuvent établir.

Dans un exemple particulier d'application, les modes de réalisation de l'invention peuvent être utilisés pour remplacer des anneaux de redondance de l'art antérieur, lourds, encombrants et coûteux, par les matrices de redondance selon les modes de réalisation de l'invention qui peuvent être basées par exemple sur des commutateurs *SPDT* électromécaniques miniaturisés, dans le domaine de l'industrie spatiale.

L'invention peut s'appliquer plus généralement à toute application industrielle utilisant des systèmes ou sous-systèmes utilisant des matrices de commutation combinatoires, c'est à dire réalisant les combinaisons de N entrées sur M sorties, comme par exemple les matrices de redondance, les matrices de commutation dans des systèmes de test, les matrices de sélectivité, etc.

Par ailleurs, l'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention s'applique à tout type d'application utilisant des matrices de redondance pour rerouter les signaux d'un équipement vers un équipement redondant ou nominal.

Par ailleurs, bien que l'invention ait été faite en référence à des commutateurs de type *SPnT,* l'homme du métier comprendra que l'invention n'est pas limitée à de tels types de commutateurs. Par exemple l'implémentation matérielle de la matrice de redondance peut utiliser une implémentation dite « cross bar » et des commutateurs de type C-switch ou R/T switches, la matrice de redondance 10 étant alors remplacée par une matrice de sélectivité totale qui permet la connexion de toute entrée vers toute sortie, avec une grille de connexion pleine. Pour notre matrice de redondance à glissement, le réseau cross-bar serait fortement dépeuplé pour ne laisser apparaître que les noeuds décrits par la grille de connexion.

**Revendications**

1. Système (100) comprenant un ensemble d'équipements (20, 20'), lesdits équipements comprenant un ou plusieurs équipements nominaux (20) et un ou plusieurs équipements redondants (20'), un équipement redondant (20') étant associés à un ou plusieurs équipements nominaux (20), le système comprenant n canaux reliés auxdits équipements, les canaux reliés aux équipements étant des canaux d'entrée ou de sortie des équipements, le système comprenant au moins une matrice de redondance (10) de dimension $n \times m$ configurée pour router les signaux d'un canal d'un équipement donné vers un équipement redondant (20') associé audit équipement donné ou vers un autre équipement nominal (20), en réponse à la détection d'un événement de déclenchement de reroutage relatif à un équipement, **caractérisé en ce que** chaque matrice de redondance est représentée par une grille de connexion ayant une représentation matricielle comprenant des lignes et des colonnes, chaque ligne correspondant à un canal $C_{i,0 \leq i < n}$ du système et chaque colonne correspondant à un équipement (20, 20') du système, et **en ce que** la grille de connexion comprend un ensemble de points de connexion correspondant à un point d'intersection entre un canal et un équipement, lesdits points de connexion de la grille de connexion comprenant au moins :

   - l'ensemble des points d'intersection d'un chemin nominal comprenant les points d'intersection de la grille de connexion situés sur une diagonale nominale de la grille de connexion, entre chaque ligne correspondant à un canal d'indice donné $i$ et une colonne correspondant à un équipement nominal de même indice $i$, et
   - l'ensemble des points d'intersection d'un chemin redondant comprenant les points d'intersection de la grille de connexion situés au niveau de l'intersection entre chaque ligne correspondant à un canal $C_i$ d'indice $i$ donné et une colonne correspondant à un élément redondant d'indice $f(i)$ tel que la fonction $f$ est une fonction surjective définie de l'ensemble $[\![0; n-1]\!]$ sur $[\![0; m-n-1]\!]$ pour tout indice $i$,

   la matrice de redondance étant implémentée sous la forme d'un circuit comprenant une pluralité de commutateurs agencés en fonction de la grille de connexion.

2. Système selon la revendication 1, **caractérisé en ce que** chaque matrice de redondance est une matrice de redondance à glissement et **en ce que** lesdits points de connexion de la grille de connexion comprennent en outre :

   - l'ensemble des points d'intersection d'un chemin à glissement comprenant les points d'intersection de la grille de connexion situés sur une diagonale supérieure de la grille de connexion, entre chaque ligne correspondant à un canal $C_i$ d'indice $i$ donné et un équipement nominal d'indice $i + (e - 1)$ modulo $n$ avec $e$ désignant une capacité de glissement de la matrice et e strictement supérieur à deux, la capacité de glissement étant le nombre de points de la matrice situés entre un point donné de la diagonale nominale sur une colonne donnée de la grille de connexion et un point de la diagonale supérieure situé sur la même colonne de la grille de connexion.

3. Système selon la revendication 1, **caractérisé en ce que** chaque matrice de redondance est une matrice de redondance à glissement et **en ce que** le chemin à glissement comprend en outre les points d'intersection de la grille de connexion situés sur une ou plusieurs diagonales intermédiaires de la grille de connexion, entre chaque ligne correspondant à un canal $C_i$ d'indice $i$ donné et un équipement nominal d'indice $E_{i+k \bmod n}$, avec $(i, k)$ appartenant à S et $S \subset [\![0; n-1]\!] \times [\![1; e-2]\!]$.

4. Système selon l'une des revendications précédentes 2 et 3, **caractérisé en ce que** si $n$ est strictement supérieur à zéro et $m$ est strictement supérieur à $n + 1$ la capacité de glissement e satisfait la condition suivante :

$$2 \leq e \leq \left\lfloor \frac{n}{m-n} \right\rfloor$$

5. Système selon la revendication 4, **caractérisé en ce qu'**une matrice de redondance parfaite présente une capacité de glissement $e$ satisfaisant la condition :

$$e \geq m - n.$$

6. Système selon la revendication 5, **caractérisé en ce qu'**une matrice de redondance de capacité de glissement $e = m - n$ est parfaite si et seulement si tous les points des diagonales intermédiaire du chemin à glissement sont des points de connexion.

7. Système selon l'une des revendications 5 et 6, **caractérisé en ce qu'**une matrice de redondance parfaite a un taux de perfection égal à un, le taux de perfection représentant le nombre d'événements de déclenchements de reroutage couverts par la matrice de redondance.

8. Système selon l'une des revendications précédentes, **caractérisé en ce qu'**il comprend une matrice de redondance d'entrée associées aux canaux d'entrée des équipements et une matrice de redondance de sortie associées aux canaux de sortie des équipements.

9. Système selon l'une des revendications précédentes, **caractérisé en ce que** les commutateurs sont de type *SPnT.*

10. Système selon la revendication 9, **caractérisé en ce que** le circuit implémentant la matrice de redondance est basé sur des arbres à commutateurs *SPnT.*

11. Système selon la revendication 10 , **caractérisé en ce que** le circuit implémentant la matrice de redondance (10) comprend un arbre correspondant à chaque ligne et un arbre correspondant à chaque colonne de la grille de connexion, la racine de chaque arbre de commutateurs *SPnT* du circuit correspondant à une ligne de la grille de connexion associée à un canal ou à une colonne de la grille de connexion associée à un équipement.

12. Système selon la revendication 11, **caractérisé en ce qu'**un arbre dudit circuit implémentant la matrice de redondance connecté à une ligne correspondant à un canal a autant de branches qu'il y a de points de connexion sur ladite ligne dans la grille de connexion et un arbre dudit circuit implémentant la matrice de redondance connecté à une colonne correspondant à un équipement a autant de branches qu'il y a de points de connexion sur ladite colonne dans la grille de connexion.

13. Système selon l'une des revendications 11 et 12, **caractérisé en ce que** les arbres correspondant aux lignes de la grille de connexion sont connectés aux arbres correspondant aux colonnes de la grille de connexion.

14. Système selon l'une des revendications précédentes, **caractérisé en ce qu'**il est configuré pour gérer un nombre de pannes sur lesdits équipements, ladite condition de reroutage étant l'occurrence d'une panne sur un équipement.

15. Système selon l'une des revendications précédentes, **caractérisé en ce que** le nombre de panne d'équipements pris en charge par le système est une fonction croissante de la capacité de glissement de la matrice, lorsque les diagonales intermédiaires sont toutes pleines.

**Patentansprüche**

1. System (100), umfassend einen Ausrüstungsgegenständesatz (20, 20'), wobei die Ausrüstungsgegenstände einen oder mehrere nominelle Ausrüstungsgegenstände (20) und einen oder mehrere redundante Ausrüstungsgegenstände (20') umfassen, wobei ein redundanter Ausrüstungsgegenstand (20') einem oder mehreren nominellen Ausrüstungsgegenständen (20) zugeordnet ist, wobei das System n Kanäle umfasst, die mit dem Ausrüstungsgegenstand verbunden sind, wobei die mit den Ausrüstungsgegenständen verbundenen Kanäle Eingangs- oder Ausgangskanäle der Ausrüstungsgegenstände sind, wobei das System mindestens eine Redundanzmatrix (10) der Größe $n \times m$ umfasst, die zum Leiten der Signale eines Kanals von einem gegebenen Ausrüstungsgegenstand zu einem dem gegebenen Ausrüstungsgegenstand zugeordneten redundanten Ausrüstungsgegenstand (20') oder zu einem anderen nominellen Ausrüstungsgegenstand (20) als Reaktion auf das Erkennen eines Umleitungsauslöseereignisses betreffend einen Ausrüstungsgegenstand konfiguriert ist, **dadurch gekennzeichnet, dass** jede Redundanzmatrix durch ein Verbindungsgitter mit einer matrixartigen Darstellung dargestellt ist, das Zeilen und Spalten umfasst, wobei jede Zeile einem Kanal $C_{i,0 \leq i < n}$ des Systems entspricht und jede Spalte einem Ausrüstungsgegenstand (20, 20') des Systems entspricht, und dadurch, dass das Verbindungsgitter einen Satz von Verbindungspunkten entsprechend einem Schnittpunkt zwischen einem Kanal und einem Ausrüstungsgegenstand umfasst, wobei die Verbindungspunkte des Verbindungsgitters mindestens Folgendes umfassen:

   - den Satz der Schnittpunkte eines nominellen Weges, der die Schnittpunkte des Verbindungsgitters, die sich auf einer nominellen Diagonale des Verbindungsgitters befinden, zwischen jeder Zeile, die einem gegebenen Indexkanal $i$ entspricht, und einer Spalte, die einem nominellen Ausrüstungsgegenstand des gleichen Indexes $i$ entspricht, umfasst, und

- den Satz der Schnittpunkte eines redundanten Weges, der die Schnittpunkte des Verbindungsgitters, die sich an der Schnittstelle zwischen jeder Zeile, die einem Kanal $C_i$ mit einem gegebenen Index $i$ entspricht, und einer Spalte, die einem redundanten Element mit dem Index $f(i)$ entspricht, befinden, umfasst, so dass die Funktion $f$ eine definierte surjektive Funktion des Satzes [[0; n - 1] auf [[0; m - n - 1] für jeden Index $i$ ist,

wobei die Redundanzmatrix in Form einer Schaltung implementiert ist, die eine Vielzahl von Schaltern umfasst, die in Abhängigkeit von dem Verbindungsgitter angeordnet sind.

2. System nach Anspruch 1, **dadurch gekennzeichnet, dass** jede Redundanzmatrix eine Verschiebungsredundanzmatrix ist und dadurch, dass die Verbindungspunkte des Verbindungsgitters ferner Folgendes umfassen:

- den Satz der Schnittpunkte eines Verschiebungsweges, der die Schnittpunkte des Verbindungsgitters, die sich auf einer höheren Diagonale des Verbindungsgitters befinden, zwischen jeder Zeile, die einem Kanal $C_i$ mit einem gegebenen Index $i$ entspricht, und einem nominellen Ausrüstungsgegenstand mit dem Index $i + (e - 1)$ Modulo $n$ umfasst, wobei e eine Verschiebungskapazität der Matrix bezeichnet und $e$ strikt größer zwei ist, wobei die Verschiebungskapazität die Zahl der Punkte der Matrix ist, die sich zwischen einem gegebenen Punkt der nominellen Diagonale auf einer gegebenen Spalte des Verbindungsgitters und einem Punkt der höheren Diagonale befinden, der sich auf der gleichen Spalte des Verbindungsgitters befindet.

3. System nach Anspruch 1, **dadurch gekennzeichnet, dass** jede Redundanzmatrix eine Verschiebungsredundanzmatrix ist und dadurch, dass der Verschiebungsweg ferner die Schnittpunkte des Verbindungsgitters umfasst, die sich auf einer oder mehreren Zwischendiagonalen des Verbindungsgitters zwischen jeder Zeile, die einem gegebenen Kanal $C_i$ mit dem Index i entspricht, und einem nominellen Ausrüstungsgegenstand mit dem Index $E_{i+ k\ Modulo\ n}$, befinden, wobei $(i, k)$ zu S gehören und $S \subset [[0; n - 1]] \times [[1; e - 2]]$.

4. System nach einem der vorhergehenden Ansprüche 2 und 3, **dadurch gekennzeichnet, dass**, wenn $n$ strikt größer null ist und $m$ strikt größer $n + 1$ ist, die Verschiebungskapazität $e$ die folgende Bedingung erfüllt:

$$2 \leq e \leq \left\lfloor \frac{n}{m - n} \right\rfloor .$$

5. System nach Anspruch 4, **dadurch gekennzeichnet, dass** seine perfekte Redundanzmatrix eine Verschiebungskapazität $e$ aufweist und die folgende Bedingung erfüllt:

$$e \geq m - n.$$

6. System nach Anspruch 5, **dadurch gekennzeichnet, dass** eine Redundanzmatrix mit der Verschiebungskapazität $e = m - n$ perfekt ist, wenn, und nur wenn, alle Punkte der Zwischendiagonalen des Verschiebungsweges Verbindungspunkte sind.

7. System nach einem der Ansprüche 5 und 6, **dadurch gekennzeichnet, dass** eine perfekte Redundanzmatrix einen Perfektionsgrad gleich eins aufweist, wobei der Perfektionsgrad die Anzahl der Umleitungsauslöseereignisse darstellt, die von der Redundanzmatrix abgedeckt sind.

8. System nach einem der vorhergehenden Ansprüche, **dadurch gekennzeichnet, dass** es eine Eingangsredundanzmatrix umfasst, die den Eingangskanälen der Ausrüstungsgegenstände zugeordnet ist, und eine Ausgangsredundanzmatrix umfasst, die den Ausgangskanälen der Ausrüstungsgegenstände zugeordnet ist.

9. System nach einem der vorhergehenden Ansprüche, **dadurch gekennzeichnet, dass** die Schalter vom *SPnT*-Typ sind.

10. System nach Anspruch 9, **dadurch gekennzeichnet, dass** die Schaltung, die die Redundanzmatrix implementiert, auf *SPnT*-Schaltergerüste basiert.

11. System nach Anspruch 10, **dadurch gekennzeichnet, dass** die Schaltung, die die Redundanzmatrix (10) implementiert, ein Gerüst entsprechend jeder Zeile und ein Gerüst entsprechend jeder Spalte des Verbindungsgitters umfasst, wobei die Wurzel jeder *SPnT*-Schalterwelle der Schaltung einer Zeile des Verbindungsgitters, die einem Kanal zugeordnet ist, oder einer Spalte des Verbindungsgitters, die einem Ausrüstungsgegenstand zugeordnet ist, entspricht.

12. System nach Anspruch 11, **dadurch gekennzeichnet**, das ein Gerüst der Schaltung, das die Redundanzmatrix implementiert, die mit einer Zeile verbunden ist, die einem Kanal entspricht, so viele Zweige aufweist, wie es Verbindungspunkte auf der Zeile in dem Verbindungsgitter gibt, und ein Gerüst der Schaltung, das die Redundanzmatrix implementiert, die mit einer Spalte verbunden ist, die einem Ausrüstungsgegenstand entspricht, so viele Zweige aufweist, wie es Verbindungspunkte auf der Spalte in dem Verbindungsgitter gibt.

13. System nach einem der Ansprüche 11 und 12, **dadurch gekennzeichnet, dass** die den Zeilen des Verbindungsgitters entsprechenden Gerüste mit den den Spalten des Verbindungsgitters entsprechenden Gerüsten verbunden sind.

14. System nach einem der vorhergehenden Ansprüche, **dadurch gekennzeichnet, dass** es dafür konfiguriert ist, eine Anzahl von Ausfällen an den Ausrüstungsgegenständen zu verwalten, wobei die Umleitungsvoraussetzung das Auftreten eines Ausfalls an einem Ausrüstungsgegenstand darstellt.

15. System nach einem der vorhergehenden Ansprüche, **dadurch gekennzeichnet, dass** die Anzahl der Ausfälle von Ausrüstungsgegenständen, die von dem System abgearbeitet werden, eine steigende Funktion der Verschiebungskapazität der Matrix ist, wenn die Zwischendiagonalen alle gefüllt sind.

**Claims**

1. A system (100) comprising a set of equipment items (20, 20'), said equipment items comprising one or more nominal equipment items (20) and one or more redundant equipment items (20'), a redundant equipment item (20') being associated with one or more nominal equipment items (20), the system comprising n channels linked to said equipment items, the channels linked to the equipment items being input or output channels of the equipment items, the system comprising at least one redundancy matrix (10) of $n \times m$ dimension configured to route the signals of a channel from a given equipment item to a redundant equipment item (20') associated with said given equipment item or to another nominal equipment item (20), in response to the detection of a rerouting-triggering event relating to an equipment item, **characterised in that** each redundancy matrix is represented by a connection grid having a matrix representation comprising rows and columns, each row corresponding to a channel $C_{i,0 \leq i < n}$ of the system and each column corresponding to an equipment item (20, 20') of the system, and **in that** the connection grid comprises a set of connection points corresponding to a point of intersection between a channel and an equipment item, said points of connection of the connection grid comprising at least:

   - all of the points of intersection of a nominal path comprising the points of intersection of the connection grid situated on a nominal diagonal of the connection grid, between each row corresponding to a channel of given index i and a column corresponding to a nominal equipment item of the same index i, and
   - all of the points of intersection of a redundant path comprising the points of intersection of the connection grid situated at the intersection between each row corresponding to a channel C; of given index *i* and a column corresponding to a redundant element of index *f(i)* such that the function *f* is a defined surjective function of the set [[0; n - 1]] on [[0; m - n - 1]] for any index *i*,

   the redundancy matrix being implemented in the form of a circuit comprising a plurality of switches arranged according to the connection grid.

2. The system according to claim 1, **characterised in that** each redundancy matrix is a sliding redundancy matrix and **in that** said connection points of the connection grid further comprise:

   - all of the points of intersection of a sliding path comprising the points of intersection of the connection grid situated on an upper diagonal of the connection grid, between each row corresponding to a channel $C_i$ of given

index $i$ and a nominal equipment item of index $i + (e - 1)$ modulo n, with $e$ designating a sliding capacity of the matrix and $e$ strictly greater than two, the sliding capacity being the number of points of the matrix situated between a given point of the nominal diagonal on a given row of the connection grid and a point of the upper diagonal situated on the same column of the connection grid.

3. The system according to claim 1, **characterised in that** each redundancy matrix is a sliding redundancy matrix and **in that** the sliding path further comprises the points of intersection of the connection grid situated on one or more intermediate diagonals of the connection grid, between each row corresponding to a channel $C_i$ of index $i$ and a nominal equipment item of index $E_{i+k \text{ modulo n}}$, with $(i, k)$ belonging to $S$ and $S \subset [[0; n - 1]] \times [[1; e - 2]]$.

4. The system according to one of the preceding claims 2 and 3, **characterised in that**, if $n$ is strictly greater than zero and $m$ is strictly greater than $n + 1$, the sliding capacity $e$ satisfies the following condition:

$$2 \leq e \leq \left\lfloor \frac{n}{m - n} \right\rfloor$$

5. The system according to claim 4, **characterised in that** a perfect redundancy matrix has a sliding capacity e satisfying the condition:

$$e \geq m - n.$$

6. The system according to claim 5, **characterised in that** a redundancy matrix of sliding capacity $e = m - n$ is perfect if, and only if, all the points of the intermediate diagonals of the sliding path are connection points.

7. The system according to one of claims 5 and 6, **characterised in that** a perfect redundancy matrix has a perfection rate equal to one, the perfection rate representing the number of rerouting-triggering events covered by the redundancy matrix.

8. The system according to one of the preceding claims, **characterised in that** it comprises an input redundancy matrix associated with the input channels of the equipment items and an output redundancy matrix associated with the output channels of the equipment items.

9. The system according to one of the preceding claims, **characterised in that** the switches are of *SPnT* type.

10. The system according to claim 9, **characterised in that** the circuit implementing the redundancy matrix is based on *SPnT* switch trees.

11. The system according to claim 10, **characterised in that** the circuit implementing the redundancy matrix (10) comprises a tree corresponding to each row and a tree corresponding to each column of the connection grid, the root of each *SPnT* switch tree of the circuit corresponding to a row of the connection grid associated with a channel or to a column of the connection grid associated with an equipment item.

12. The system according to claim 11, **characterised in that** a tree of said circuit implementing the redundancy matrix connected to a row corresponding to a channel has as many branches as the connection points on said row in the connection grid and a tree of said circuit implementing the redundancy matrix connected to a column corresponding to an equipment item has as many branches as there are connection points on said column in the connection grid.

13. The system according to one of claims 11 and 12, **characterised in that** the trees corresponding to the rows of the connection grid are connected to the trees corresponding to the columns of the connection grid.

14. System according to one of the preceding claims, **characterised in that** it is configured to manage a number of failures on said equipment items, said rerouting condition being the occurrence of a failure on an equipment item.

15. System according to one of the preceding claims, **characterised in that** the number of equipment item failures managed by the system is an increasing function of the sliding capacity of the matrix, when the intermediate diagonals are all full.

**Figure 1**

**Figure 2**

**Figure 3**

Figure 4

Figure 5

Figure 6

Figure 7

Figure 8

Figure 9

**Figure 10**

Figure 11

Figure 12

**Figure 13**

10

Figure 14

Figure 15

10

Figure 16

Matrice de redondance de sortie

Matrice de redondance d'entrée

## Figure 17

50

$k-1$ SPDT

$k$ branches

$k-1$ SPDT

50

$k$ branches

## Figure 18

**Figure 19**

500

Figure 20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MOJGAN DANESHMAND et al.** Redundancy RF MEMS Multiport Switches and Switch Matrices. *JOURNAL OF MICROELECTROMECHANICAL SYSTEMS, IEEE SERVICE CENTER, US,* 30 Avril 2007, vol. 16 (2), 296-303